# FASCICULE DE BREVET EUROPEEN

(11) **EP 3 732 743 B1**
(45) Date de publication et mention de la délivrance du brevet: **26.05.2021**
(21) Numéro de dépôt: 18839681.6
(22) Date de dépôt: 27.12.2018
(51) Int. Cl.: H01M 8/04029, H01M 8/04007, H01M 8/04223, H01M 8/1018

(54) **ENSEMBLE DE PRODUCTION D'ÉNERGIE COUPLANT UNE PILE À COMBUSTIBLE ET UN SYSTÈME THERMODYNAMIQUE RÉVERSIBLE**
ENERGIEERZEUGUNGSANLAGE MIT KOPPLUNG EINER BRENNSTOFFZELLE UND EINES REVERSIBLEN THERMODYNAMISCHEN SYSTEMS
ENERGY PRODUCTION ASSEMBLY COUPLING A FUEL CELL AND A REVERSIBLE THERMODYNAMIC SYSTEM

(30) Priorité: 27.12.2017 FR 1763265
(43) Date de publication de la demande: 04.11.2020
(73) Titulaire: Commissariat à l'énergie atomique et aux énergies alternatives (CEA), 75015 Paris (FR); Safran Power Units, 31200 Toulouse (FR)
(72) Inventeur: TAUVERON, Nicolas, 38100 Grenoble (FR); BOILLOT, Benjamin, 38330 Saint-Ismier (FR); JOLLYS, Jean-Baptiste, 77550 Moissy-Cramayel (FR)
(74) Mandataire: Brizio Delaporte, Allison
(86) Numéro de dépôt international: PCT/FR2018/000274
(87) Numéro de publication internationale: WO 2019/129940

(56) Documents cités:
- DE-A1- 19 951 217
- FR-A1- 2 868 605
- JP-A- 2009 283 178
- KR-A- 20150 011 687
- US-A1- 2006 010 872
- US-A1- 2015 340 749
- US-A1- 2016 265 392

## Description

### DOMAINE TECHNIQUE DE L'INVENTION

L'invention concerne un ensemble de production d'énergie couplant une pile à combustible et un système thermodynamique réversible.

L'invention concerne l'amélioration du fonctionnement des piles à combustible notamment de type à membrane échangeuse de proton.

L'invention trouvera des applications dans tous les domaines dans lesquels les piles à combustible et notamment à membrane échangeuse de proton sont utilisées.

L'invention s'appliquera préférentiellement aux domaines des transports.

### ÉTAT DE LA TECHNIQUE

Les piles à combustible à membrane d'échange de protons sont connues aussi sous le nom de piles à combustible à membrane électrolyte polymère (ou PEMFC selon l'acronyme des expressions anglaises Proton Exchange Membrane Fuel Cells ou Polymer Electrolyte Membrane Fuel Cells). Les PEMFC permettent un fonctionnement dans des gammes de basses pressions et températures. Elles comprennent une membrane électrolyte polymère spécifique.

Une PEMFC transforme l'énergie chimique libérée durant la réaction électrochimique du dihydrogène (H2) et du dioxygène (O2) en énergie électrique, processus « opposé » à la réaction thermochimique de ces deux corps produisant de l'énergie thermique. Un jet d'hydrogène est dirigé vers le côté anode de l'assemblage de la membrane-électrode. Il est à cet instant divisé catalytiquement en protons et électrons. Cette réaction d'oxydation dans la demi-cellule est décrite par :

H₂ → 2H⁺ + 2e⁻

Dans le même temps, un flux d'oxygène est dirigé du côté cathode du MEA. Les molécules de dioxygène réagissent avec les protons traversant la membrane électrolyte polymère et les électrons arrivant par le circuit externe afin de former des molécules d'eau. Cette réaction de réduction dans la demi-cellule électrolytique s'écrit :

4H⁺ + 4e⁻ + O₂ →2H₂O

Une pile à combustible de ce type alimenté en Hydrogène et oxygène fournit une puissance thermique du même ordre de grandeur que la puissance électrique. Ceci est d'autant plus vrai lorsque la pile à combustible fonctionne à haute température, avantageusement entre 120°C et 180°C.

L'élimination de la chaleur est donc un enjeu essentiel pour éviter la surchauffe, et donc la détérioration, de la membrane. Il existe plusieurs façons d'évacuer cette chaleur : - Une circulation d'un liquide caloporteur est assurée à l'intérieur d'une plaque bipolaire possédant un circuit thermique dédié ou au sein de plaques dédiées intercalées par exemple toutes les 2 à 3 cellules d'une pile à combustible ; - De l'eau est injectée avec l'air à l'entrée de la cellule, et la chaleur est éliminée par évaporation partielle de l'eau ; - Chaque plaque bipolaire est équipée d'ailettes et la chaleur est évacuée par circulation forcée d'air à l'extérieur. Dans toutes ces options, le circuit de refroidissement inclut donc une boucle liquide ou gazeuse avec son circulateur et éventuellement (cas du liquide) un échangeur thermique vers l'extérieur.

Il est par ailleurs étudié de valoriser cette énergie thermique, notamment pour augmenter le rendement électrique des piles à combustible dans le but d'abaisser le coût de l'énergie produite par ces systèmes. D'autant plus que l'écart de température avec l'air ambiant au niveau de l'échangeur thermique décrit ci-dessus est faible et qu'il est alors nécessaire d'utiliser des échangeurs de taille relativement importante.

Il a notamment été décrit dans l'article Power optimization of a combined power system consisting of a high-temperature polymer electrolyte fuel cell and an organic Rankine cycle system de Won-Yong Lee et al. Energy 113 (2016) 1062-1070 de combiner un système mettant en oeuvre un cycle organique de Rankine pour valoriser l'énergie thermique produite par la pile à combustible.

Le document JP2009283178 décrit un ensemble de production d'énergie comprenant une pile à combustible, un circuit fluidique de pile configuré pour recevoir un premier fluide caloporteur et agencé au moins partiellement autour de la pile à combustible.

Toutefois, ce type de développement n'est pas suffisant pour rendre les piles à combustible utilisables dans diverses applications notamment de transport.

Il existe donc le besoin de proposer une solution qui améliore encore le rendement énergétique des piles à combustible notamment de type PEMFC.

### RÉSUMÉ DE L'INVENTION

Pour atteindre cet objectif, selon un mode de réalisation, la présente invention prévoit un ensemble de production d'énergie comprenant une pile à combustible, un circuit fluidique de pile configuré pour recevoir un premier fluide caloporteur avantageusement agencé au moins partiellement autour de la pile à combustible caractérisé en ce que l'ensemble comprend un système thermodynamique réversible configuré pour alternativement évacuer de l'énergie thermique produite par la pile à combustible et la transformer en énergie mécanique au travers du premier fluide caloporteur et pour apporter de l'énergie thermique à la pile à combustible au travers du premier fluide caloporteur, le système thermodynamique comprenant un circuit fluidique thermodynamique configuré pour recevoir un deuxième fluide caloporteur, et un premier échangeur destiné à échanger de l'énergie thermique entre le circuit fluidique thermodynamique et le circuit fluidique de pile, et un deuxième échangeur destiné à échanger de l'énergie thermique entre le circuit fluidique thermodynamique et une source extérieure.

L'invention présente l'avantage d'améliorer notablement le rendement énergétique global d'une pile à combustible en améliorant à la fois la valorisation de l'énergie thermique produite par la pile et la consommation d'énergie nécessaire lors du démarrage de la pile à combustible.

En effet, un axe de recherche sur les piles à combustible notamment de type PEMFC fonctionnant à haute température concerne le démarrage de ces piles. En effet, pour que la pile puisse commencer à produire de l'électricité, il est nécessaire que la membrane atteigne une certaine température en particulier de l'ordre de 120°C pour les PEMFC haute température. Pour que la membrane atteigne cette température, il est donc nécessaire de chauffer la membrane par un apport d'énergie thermique. Cette chaleur est par exemple apportée par une résistance électrique placée dans l'empilement de la pile pour chauffer la membrane. Cette solution est fortement consommatrice d'énergie.

La présente invention permet donc d'évacuer l'énergie thermique pour produire de l'énergie mécanique voire de l'énergie électrique tout en permettant un apport d'énergie thermique grâce à un système thermodynamique configuré pour fonctionner dans les deux sens de fonctionnement en étant faiblement consommateur d'énergie.

Selon un mode de réalisation, le système thermodynamique réversible, et avantageusement unique, comprend un module à cycles thermodynamiques configuré pour fonctionner alternativement en production d'énergie mécanique, par exemple cycle Organique de Rankine, et en production d'énergie thermique, par exemple cycle à compression mécanique de vapeur.

Selon un mode de réalisation, le système thermodynamique réversible comprend un moteur Stirling configuré pour fonctionner alternativement en production d'énergie mécanique et en production d'énergie thermique.

Un autre aspect de la présente invention concerne un procédé de production d'énergie par un ensemble de production tel que décrit ci-dessus comprenant les étapes successives suivantes :
- de démarrage de la pile à combustible par un apport d'énergie thermique à la pile
- de fonctionnement de la pile à combustible générant un courant électrique et de l'énergie thermique
caractérisé en ce que lors de l'étape de démarrage, un système thermodynamique réversible apporte de l'énergie thermique à la pile à combustible au travers d'un premier fluide caloporteur et que lors de l'étape de fonctionnement, ledit système thermodynamique réversible évacue l'énergie thermique produite par la pile à combustible au travers du premier fluide caloporteur et la transforme en énergie mécanique au travers d'un deuxième fluide caloporteur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 est une représentation schématique d'un ensemble de production d'énergie selon un mode de réalisation de l'invention lors de l'étape de démarrage de la pile.
La FIGURE 2 est une représentation schématique d'un ensemble de production d'énergie selon le premier mode de réalisation de l'invention lors de l'étape de fonctionnement de la pile.
La FIGURE 3 est une représentation schématique d'un ensemble de production d'énergie selon une variante du premier mode de réalisation de l'invention lors de l'étape de fonctionnement de la pile.
La FIGURE 4 est une représentation schématique d'un ensemble de production d'énergie selon une variante du premier mode de réalisation de l'invention lors de l'étape de fonctionnement de la pile.
La FIGURE 5 est une représentation schématique d'un ensemble de production d'énergie selon un deuxième mode de réalisation de l'invention lors de l'étape de démarrage de la pile.
La FIGURE 6 est une représentation schématique d'un ensemble de production d'énergie selon le deuxième mode de réalisation de l'invention lors de l'étape de fonctionnement de la pile.
La FIGURE 7 est une représentation schématique d'un ensemble de production d'énergie selon une variante du deuxième mode de réalisation de l'invention lors de l'étape de fonctionnement de la pile.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. Les traits en pointillés indiquent des connexions fluidiques inactives et les traits pleins des connexions fluidiques actives

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
∘ Avantageusement, le circuit fluidique de pile est un circuit fermé.
∘ Avantageusement, le circuit fluidique thermodynamique est un circuit fermé. On entend par circuit fermé que le circuit forme une boucle dans lequel circule avantageusement sans discontinuité, le premier et le deuxième fluide caloporteur.
∘ Avantageusement, le système thermodynamique réversible comprend au moins un module de production d'énergie thermique, préférentiellement alimenté en électricité, connecté au premier échangeur thermique.
∘ Avantageusement, le module de production d'énergie thermique est connecté fluidiquement et/ou thermiquement au premier échangeur par le circuit fluidique thermodynamique de sorte à échanger l'énergie thermique produite par le module de production d'énergie thermique vers le circuit fluidique de pile.

Selon une possibilité, le module de production d'énergie thermique comprend une pompe à chaleur, plus précisément au moins un compresseur, le compresseur étant connecté fluidiquement au premier échangeur.

Selon une possibilité, le module de production d'énergie thermique comprend un moteur Sterling, ce moteur Sterling étant connecté thermiquement au premier échangeur.

Avantageusement, le système thermodynamique réversible comprend un module de production d'énergie mécanique.

Selon une possibilité module de production d'énergie mécanique comprend un module à cycle organique de Rankine.

Selon une possibilité, le module de production d'énergie mécanique comprend un moteur Sterling.
∘ Avantageusement, le système thermodynamique, avantageusement unique, réversible associe un module à Cycle Organique de Rankine et une pompe à chaleur sous la forme d'un cycle à compression mécanique de vapeur.
∘ Avantageusement, la pompe à chaleur comprend un compresseur et un détendeur agencés en série avec le premier échangeur et le deuxième échangeur sur le circuit fluidique thermodynamique.
∘ Avantageusement, le module à cycle organique de Rankine comprend une turbine et une pompe, destinée à faire circuler le deuxième fluide caloporteur dans le circuit fluidique, agencées en série avec le premier échangeur et le deuxième échangeur sur le circuit fluidique thermodynamique.
∘ Avantageusement, le compresseur est agencé en parallèle de la turbine sur le circuit fluidique thermodynamique.
∘ Avantageusement, la pompe est agencée en parallèle du détendeur sur le circuit fluidique thermodynamique.
∘ Avantageusement, le circuit fluidique thermodynamique comprend un circuit de pompe à chaleur mettant en connexion fluidique successivement le premier échangeur, le détendeur, le deuxième échangeur, le compresseur et à nouveau le premier échangeur de sorte que le deuxième fluide caloporteur circule successivement dans le premier échangeur, le détendeur, le deuxième échangeur, le compresseur et à nouveau le premier échangeur.
∘ Avantageusement, le circuit fluidique thermodynamique comprend un circuit de module à cycle organique de Rankine mettant en connexion fluidique successivement le premier échangeur, la turbine, le deuxième échangeur, la pompe et à nouveau le premier échangeur de sorte que le deuxième fluide caloporteur circule successivement dans le premier échangeur, la turbine, le deuxième échangeur, la pompe et à nouveau le premier échangeur.
∘ Avantageusement, l'ensemble comprend des organes d'aiguillage du deuxième fluide caloporteur alternativement vers la turbine ou le compresseur et vers la pompe ou le détendeur.
∘ Avantageusement, la turbine est reliée à un alternateur ou un compresseur ou une pompe .
∘ Avantageusement, le compresseur est relié à alimentation électrique.
∘ Avantageusement, le système thermodynamique réversible comprend un moteur Stirling réversible.
∘ Avantageusement, le moteur Stirling est configuré pour alternativement produire de l'énergie mécanique à partir d'énergie thermique et produire de l'énergie thermique à partir d'énergie mécanique, telle une pompe à chaleur.
∘ Avantageusement, dans lequel le circuit fluidique thermodynamique comprend une première boucle et une deuxième boucle, la première boucle comprend une pompe, configurée pour permettre la circulation du deuxième fluide caloporteur entre le premier échangeur, et une zone chaude du moteur Stirling, la deuxième boucle, comprend une pompe, configurée pour permettre la circulation du deuxième fluide caloporteur entre le deuxième échangeur et une zone froide du moteur Stirling.
∘ Avantageusement, l'ensemble comprend un troisième échangeur thermique agencé sur la première boucle configuré pour échanger de l'énergie thermique entre le deuxième fluide caloporteur de la première boucle et un fluide caloporteur intermédiaire configuré pour circuler autour de la zone chaude du moteur Stirling, et un quatrième échangeur thermique agencé sur la deuxième boucle configuré pour échanger de l'énergie thermique entre le deuxième fluide caloporteur de la deuxième boucle et le fluide caloporteur intermédiaire configuré pour circuler autour de la zone froide du moteur Stirling.
∘ Avantageusement, comprenant une roue reliée à au moins un piston, préférentiellement deux, du moteur Stirling.
∘ Avantageusement, la pile à combustible est du type à membrane échangeuse de proton à haute température ou HT-PEMFC en anglais.
∘ Avantageusement, l'ensemble comprend un module de production d'énergie associé à la pile à combustible configuré pour produire de l'électricité à partir du flux d'électrons produit par la pile à combustible.

On préférera utiliser un moteur de type alpha car il offre un rapport de puissance-volume élevé adapté aux contraintes d'intégration, un rendement amélioré grâce à la présence d'un régénérateur ainsi qu'une dissociation nette des sources chaude et froide. Le fluide de travail pour ce cycle est l'air ou l'azote.
- Avantageusement, lors de l'étape de démarrage, un premier échangeur thermique transmet de l'énergie thermique d'un deuxième fluide caloporteur circulant dans un circuit fluidique thermodynamique et un premier fluide caloporteur circulant dans un circuit fluidique de pile.
- Avantageusement, lors de l'étape de démarrage, un deuxième échangeur thermique transmet de l'énergie thermique d'une source extérieure au deuxième fluide caloporteur circulant dans le circuit fluidique thermodynamique.
- Avantageusement le système thermodynamique comprend un module à cycle organique de Rankine fonctionnant lors de l'étape de fonctionnement de la pile à combustible et configuré pour transformer la chaleur produite en énergie électrique, le module à cycle organique de Rankine étant associé à une pompe à chaleur fonctionnant lors de l'étape de démarrage de la pile à combustible et configuré pour fournir de l'énergie thermique à la pile à combustible.
- Avantageusement, lors de l'étape de démarrage de la pile à combustible, le deuxième fluide caloporteur circule dans le circuit fluidique thermodynamique en passant successivement par le compresseur mettant en circulation le deuxième fluide caloporteur, puis le deuxième fluide caloporteur passe dans le premier échangeur dans lequel le deuxième fluide caloporteur se condense et transfert l'énergie thermique au premier fluide caloporteur pour le démarrage de la pile à combustible, puis passe par le détendeur dans lequel le deuxième fluide caloporteur subit une chute de pression, puis passe par le deuxième échangeur dans lequel le deuxième fluide caloporteur s'évapore en récupérant de l'énergie thermique d'une source chaude.
- Avantageusement, lors de l'étape de fonctionnement de la pile à combustible, le deuxième fluide caloporteur circule dans le circuit fluidique thermodynamique en passant successivement par le premier échangeur (3) dans lequel il se vaporise en récupérant l'énergie thermique du premier fluide caloporteur circulant dans le circuit fluidique de pile, puis par la turbine dans laquelle le deuxième fluide caloporteur se détend permettant la production d'énergie mécanique, puis par le deuxième échangeur dans lequel le deuxième fluide caloporteur se condense au contact d'une source froide, puis par une pompe dans laquelle le deuxième fluide caloporteur est mis en pression pour être envoyé vers le premier échangeur.
- Avantageusement, le circuit fluidique thermodynamique comprend un régénérateur agencé entre la pompe et le premier échangeur configuré pour augmenter la température du deuxième fluide caloporteur en entrée du premier échangeur.
- Avantageusement, le système thermodynamique comprend un moteur Stirling réversible configuré pour fournir de l'énergie thermique à la pile à combustible lors de l'étape de démarrage de la pile à combustible et configuré pour transformer la chaleur produite en énergie mécanique lors de l'étape de fonctionnement de la pile à combustible.
- Avantageusement lors de l'étape de démarrage, le deuxième fluide caloporteur récupère de l'énergie thermique au niveau du deuxième échangeur par échange avec source extérieure puis transmet l'énergie thermique à une zone froide du moteur Stirling par échange avec un fluide de travail circulant dans le moteur Stirling, un piston actionné par une roue déplace le fluide de travail dans la zone chaude, le deuxième fluide caloporteur récupère de l'énergie thermique par échange avec le fluide de travail de la zone chaude du moteur Stirling qu'il transfère au premier fluide caloporteur dans le premier échangeur.
- Avantageusement lors de l'étape de fonctionnement, le deuxième fluide caloporteur récupère de l'énergie thermique au niveau du premier échangeur par échange avec le premier fluide caloporteur puis transmet l'énergie thermique à une zone chaude du moteur Stirling par échange avec un fluide de travail circulant dans le moteur Stirling de sorte à actionner un piston du moteur produisant une énergie mécanique et déplaçant le fluide de travail dans la zone froide, le deuxième fluide caloporteur récupérant de l'énergie thermique par échange avec le fluide de travail de la zone froide du moteur Stirling

L'usage de l'article indéfini « un » ou « une » pour un élément ou une étape n'exclut pas, sauf mention contraire, la présence d'une pluralité de tels éléments ou étapes.

Il est précisé que dans le cadre de la présente invention, les termes « sur », « surmonte », « recouvre » ou « sous-jacent » ou leurs équivalents ne signifient pas forcément « au contact de ».

Dans la présente description, l'expression « A fluidiquement raccordé à B » ou « A connecté fluidiquement à B » ne signifie pas nécessairement qu'il n'existe pas d'organe entre A et B.

On entend par échange direct ou couplage direct que l'échange d'énergie thermique se fait directement sans circuit ou composant intermédiaire.

La présente invention concerne un ensemble de production d'énergie comprenant une pile à combustible 1.

Préférentiellement, la pile à combustible 1 est une pile à combustible à membrane échangeuse de proton à haute température. C'est-à-dire qu'elle commence à fonctionner lorsque la membrane atteint une température de l'ordre de 90 à 120°C, c'est le démarrage, un fonctionnement transitoire. En fonctionnement, la température se situe plutôt entre 120° et 180°C.

La pile à combustible 1 est destinée à la production d'énergie électrique. La pile 1 comprend un module de production d'électricité 10 directement relié à la pile et destiné à récupérer le flux d'électrons produit par la pile 1 pour produire de l'énergie électrique. La pile à combustible produit également de l'énergie thermique. L'ensemble selon l'invention comprend un circuit fluidique 2 de pile configuré pour recevoir un premier fluide caloporteur. Le circuit fluidique de pile 2 est un circuit fermé c'est-à-dire que le circuit est clos sorte à former une boucle dans laquelle circule avantageusement le premier fluide caloporteur. Le premier fluide caloporteur est de type hydrocarbures, tel que du pentane par exemple, ou du dioxyde de carbone CO₂ ou NH₃ ou de type hydrofluorurecarboné ou équivalent (HFC, HFO ou HFE). Le circuit fluidique 2 de pile est avantageusement agencé au moins partiellement au contact de la pile 1 et plus précisément au contact de la partie chaude de la pile 1. Par exemple, une plaque échangeuse dans laquelle circule le premier fluide caloporteur est disposée dans l'empilement de la pile 1.

Selon l'invention, l'ensemble comprend un système thermodynamique réversible. Ce système thermodynamique réversible peut également être dénommé système de conversion d'énergie réversible.

On entend par réversible que le système thermodynamique fonctionne alternativement en production d'énergie mécanique à partir d'énergie thermique ou en production d'énergie thermique. Le même système thermodynamique fonctionne donc suivant un mode et dans l'autre. Le système thermodynamique selon l'invention est configuré pour évacuer l'énergie thermique produite par la pile à combustible 1 et la transformer en énergie mécanique voire éventuellement en énergie électrique et alternativement fournir de l'énergie thermique à la pile à combustible 1. Ainsi, l'ensemble selon l'invention présente les deux fonctions alternativement, c'est-à-dire l'une puis l'autre.

L'ensemble comprend à cet effet avantageusement un circuit fluidique thermodynamique 18 configuré pour recevoir un deuxième fluide caloporteur. Le circuit fluidique thermodynamique 18 est indépendant c'est-à-dire qu'il n'est pas fluidiquement connecté au circuit fluidique de pile 2. Le circuit fluidique thermodynamique 18 est un circuit fermé, c'est-à-dire clos de sorte à former une boucle dans laquelle circule le deuxième fluide caloporteur. Le deuxième fluide caloporteur peut être identique ou différent du premier fluide caloporteur. Le deuxième fluide caloporteur est de type hydrocarbures, tel que du pentane par exemple, ou du dioxyde de carbone CO₂ ou NH₃ ou de type hydrofluorurecarbone ou équivalent (HFC, HFO ou HFE).

Le système thermodynamique comprend un premier échangeur 3 thermique ou de chaleur destiné à échanger l'énergie thermique entre le circuit fluidique thermodynamique 18 et le circuit fluidique de pile 2 et un deuxième échangeur 4 thermique ou de chaleur destiné à échanger de l'énergie thermique entre le circuit fluidique thermodynamique 18 et une source extérieure 9.

Le premier échangeur thermique 3 comprend une entrée 201 du premier fluide caloporteur et une sortie 202 du premier fluide caloporteur. L'entrée 201 et la sortie 202 assurent la connexion fluidique du circuit fluidique de pile au premier échangeur 3. Le premier échangeur thermique 3 comprend en outre une entrée 103 du deuxième fluide caloporteur et une sortie 104 du deuxième fluide caloporteur. L'entrée 103 et la sortie 104 assurent la connexion fluidique du circuit fluidique thermodynamique au premier échangeur 3.

Avantageusement, le système thermodynamique comprend un module de production d'énergie mécanique à partir de l'énergie thermique de la pile à combustible et un module de production d'énergie thermique destinée à être fournie à la pile à combustible.

Le module de production d'énergie thermique est avantageusement alimenté en électricité. Le module de production d'énergie thermique est avantageusement connecté fluidiquement au premier échangeur thermique.

Le module de production d'énergie thermique comprend selon premier mode de réalisation une pompe à chaleur. La pompe à chaleur comprend un compresseur 5 alimenté en électricité et dont une sortie fluidique 110 du deuxième fluide caloporteur est connectée fluidiquement à une entrée fluidique 203 du premier échangeur thermique 3.

Le module de production d'énergie thermique comprend selon un deuxième mode de réalisation un moteur sterling. Le moteur sterling est alimenté en électricité et est connecté thermiquement au premier échangeur 3, plus précisément à une entrée 303, 403 du premier échangeur 3.

Le module de production d'énergie mécanique est selon un premier mode de réalisation un module à cycle organique de Rankine et selon un deuxième mode de réalisation un moteur sterling.

Selon un premier mode de réalisation, le système thermodynamique comprend un module à cycle organique de Rankine (Organic Rankine Cycle, ORC, en anglais) réversible en pompe à chaleur. Le module à cycle organique de Rankine, également dénommé dans la suite module de Rankine, permet notamment de produire de la puissance mécanique à partir d'une source chaude à basse ou moyenne température. Le module de Rankine permet de valoriser l'énergie thermique produite par la pile à combustible 1 en transformant l'énergie thermique en énergie mécanique. La pompe à chaleur permet de transférer de l'énergie thermique, c'est-à-dire des calories, d'un milieu à basse température telle une source froide, vers un milieu à haute température telle une source chaude. Elle permet donc d'inverser le « sens naturel » du transfert spontané de l'énergie thermique. La pompe à chaleur permet de fournir de l'énergie thermique à la pile à combustible 1. Selon l'invention, le système thermodynamique est configuré pour alternativement fonctionner en mode module de Rankine et en mode pompe à chaleur.

Avantageusement, la pompe à chaleur selon l'invention fonctionne dans une gamme de température comprise entre 15 et 120 °C. Elle permet une économie substantielle d'électricité par rapport à une chauffe électrique de l'état de la technique. Le coefficient de performance (COP) de la pompe à chaleur est avantageusement de l'ordre de 3 à 4.

La pompe à chaleur comprend un détendeur 6 et un compresseur 5 agencés en série avec le premier échangeur de chaleur 3 et le deuxième échangeur de chaleur 4. Avantageusement, ces organes sont disposés sur le circuit fluidique thermodynamique 18, et plus précisément sur un circuit dit de pompe à chaleur, notamment de sorte que le deuxième fluide caloporteur les traverse préférentiellement successivement le premier échangeur thermique 3, le détendeur 6, le deuxième échangeur thermique 4 et le compresseur 5, puis à nouveau le premier échangeur thermique 3.

Le module de Rankine comprend une turbine 8 et une pompe 7 agencés en série avec le premier échangeur de chaleur 3 et le deuxième échangeur de chaleur 4. Avantageusement, ces organes sont disposés sur le circuit fluidique thermodynamique 18, et plus précisément sur un circuit dit de module de Rankine, notamment de sorte que le deuxième fluide caloporteur les traverse préférentiellement successivement le premier échangeur thermique 3, la turbine 8, le deuxième échangeur thermique 4 et la pompe 7, puis à nouveau le premier échangeur thermique 3.

Le module de Rankine et la pompe à chaleur sont hydribés. On entend par hydribés que les organes sont associés pour former un système thermodynamique selon l'invention. Le module de Rankine et la pompe à chaleur partagent au moins partiellement le même circuit fluidique thermodynamique, le premier échangeur thermique 3 et le deuxième échangeur thermique 4, en effet le circuit de pompe à chaleur est au moins partiellement commun avec le circuit de module de Rankine. La pompe à chaleur et le module de Rankine sont associés et sont en fonctionnement de manière alternative. Le couplage du module de Rankine et de la pompe à chaleur s'entend structurellement, et leur fonctionnement est alternatif et non pas simultané.

Plus précisément, le détendeur 6 et la pompe 7 sont agencés en parallèle sur le circuit fluidique 18. C'est-à-dire que le détendeur 6 est disposé sur une branche 13b du circuit fluidique thermodynamique 18 reliant avantageusement le premier échangeur 3 et le deuxième échangeur 4, et la pompe 7 est disposé sur une branche 13a du circuit fluidique thermodynamique 18 reliant avantageusement le premier échangeur 3 et le deuxième échangeur 4. Les deux branches 13a, 13b sont parallèles et la circulation du deuxième fluide caloporteur dans l'une ou l'autre des deux branches 13a, 13b est avantageusement contrôlée par des organes d'aiguillage comprenant par exemple des vannes 19 trois voies orientant le deuxième fluide caloporteur dans une ou l'autre des deux branches 13a, 13b selon le mode fonctionnement de l'ensemble de production et du système thermodynamique.

De même, la turbine 8 et le compresseur 5 sont agencés en parallèle sur le circuit fluidique. C'est-à-dire que la turbine 8 est disposée sur une branche 14a du circuit fluidique thermodynamique 18 reliant avantageusement le premier échangeur 3 et le deuxième échangeur 4, et le compresseur 5 est disposé sur une branche 14b du circuit fluidique thermodynamique 18 reliant avantageusement le premier échangeur 3 et le deuxième échangeur 4. Les deux branches 14a, 14b sont parallèles et la circulation du deuxième fluide caloporteur dans l'une ou l'autre des deux branches 14a, 14b est avantageusement contrôlée par des organes d'aiguillage comprenant par exemple des vannes 19 trois voies orientant le deuxième fluide caloporteur dans une ou l'autre des deux branches 14a, 14b selon le mode fonctionnement de l'ensemble de production et du système thermodynamique.

La pompe 7 est une pompe configurée pour faire circuler le deuxième fluide caloporteur dans le circuit fluidique thermodynamique 18. La turbine 8 transforme l'énergie thermique en énergie mécanique en faisant tourner un arbre de rotation. Selon différentes possibilités, la turbine est reliée à un alternateur pour produire de l'électricité ou à un compresseur ou une pompe pour directement utiliser l'énergie mécanique.

Suivant une possibilité avantageuse, le système thermodynamique comprend un compresseur scroll réversible couplé ou associé à un moteur ou alternateur. Cette possibilité permet un gain d'investissement, de masse et d'encombrement en limitant le nombre d'organes dans le système thermodynamique.

Avantageusement, les flux de deux fluides échangeant de l'énergie thermique au niveau d'un échangeur thermique de l'ensemble se font à contresens de sorte à optimiser les échanges.

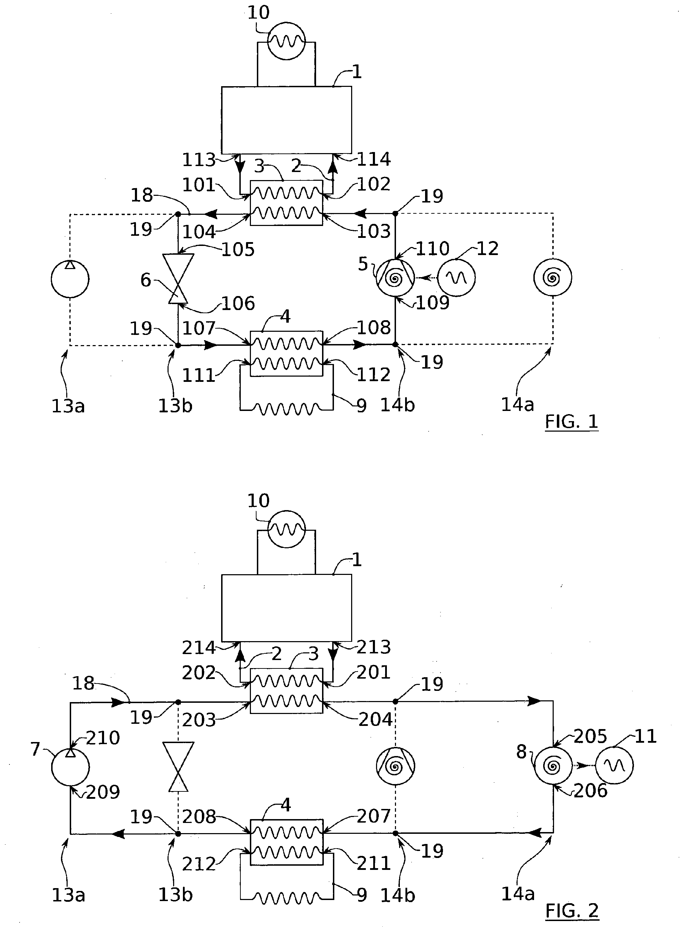

Au regard des figures 1 et 2, la structure et le fonctionnement de l'ensemble de production d'énergie selon un premier mode de réalisation sont décrits ci-dessous.

L'ensemble comprend le circuit fluidique de pile 2 comprenant un premier fluide caloporteur. Le circuit fluidique de pile traverse successivement la pile 1 et le premier échangeur 3 de sorte à alternativement évacuer l'énergie thermique de la pile 1 vers le premier échangeur 3 ou fournir de l'énergie thermique de la pile 1 récupérer au niveau du premier échangeur 3.

Le compresseur 5 est avantageusement alimenté par une alimentation électrique 12 telle que par exemple des batteries stockant de l'énergie électrique ou un réseau électrique notamment embarqué pour des applications transports.

Le détendeur 6 est du type d'une vanne permettant de détendre le deuxième fluide caloporteur le traversant.

La figure 1 illustre un ensemble selon l'invention dans lequel le système thermodynamique comprend un module de Rankine associé à une pompe à chaleur. Dans le cas illustré, le système thermodynamique fonctionne en mode pompe à chaleur. C'est-à-dire que le deuxième fluide caloporteur circule dans le circuit fluidique thermodynamique 18, dit circuit de pompe à chaleur, en traversant les différents éléments de la pompe à chaleur.

Le circuit fluidique de pile 2 comprend une sortie 113 du premier fluide caloporteur hors de la pile 1 qui est connecté fluidiquement à une entrée 101 du premier fluide caloporteur dans le premier échangeur 3. Le premier fluide caloporteur traverse le premier échangeur thermique 3 et ressort par une sortie 102 connectée fluidiquement à une entrée 114 du premier fluide caloporteur dans la pile 1.

Le circuit fluidique thermodynamique 18, dit circuit de pompe à chaleur, est décrit ci-après, une sortie 104 du deuxième fluide caloporteur du premier échangeur thermique 3 est connectée fluidiquement à une entrée 105 du détendeur 6. Le deuxième fluide caloporteur ressort du détendeur 6 par une sortie 106 connectée fluidiquement à une entrée 107 du deuxième échangeur 4. Le deuxième fluide caloporteur ressort du deuxième échangeur 4 par une sortie 108 connectée fluidiquement à une entrée 109 du compresseur 5. Le deuxième fluide caloporteur ressort du compresseur 5 par une sortie 110 connectée fluidiquement à une entrée 103 du premier échangeur thermique 3. Avantageusement, les connexions fluidiques entre les différents organes comprennent des organes d'aiguillage tels que des vannes 19 du type vannes trois voies permettant d'aiguiller le deuxième fluide caloporteur dans les branches 13a, ou 13b et 14a ou 14b. Au niveau du deuxième échangeur thermique 4 circule une source extérieure 9 pénétrant dans le deuxième échangeur 4 par une entrée 111 et ressort du deuxième échangeur 4 par une sortie 112. Cette source extérieure 9 est une source froide, par exemple l'air de la cabine d'un avion ou une source d'eau qu'on réchauffe ou éventuellement l'air extérieur.

En fonctionnement, l'ensemble selon l'invention suivant le cas de la figure 1 permet le démarrage de la pile 1.

Le deuxième fluide caloporteur pénètre dans le compresseur 5. Le compresseur 5 met en circulation le deuxième fluide caloporteur qui ressort par la sortie 110 du compresseur 5 avantageusement à l'état gazeux et plus chaud qu'il n'y est entré. Le deuxième fluide caloporteur traverse alors le premier échangeur 3 fonctionnant en condenseur après avoir été avantageusement aiguillé par une vanne 19. Lors de son passage dans le condenseur 3, le deuxième fluide caloporteur transfert son énergie thermique c'est-à-dire des calories et se condense. Le deuxième fluide caloporteur change d'état. Dans le premier échangeur 3, le premier fluide caloporteur circule et récupère les calories du deuxième fluide caloporteur de sorte à les fournir à la pile 1. Avantageusement, la connexion fluidique c'est-à-dire la tuyauterie située entre le condenseur 3 et le détendeur 6 s'appelle ligne liquide, le deuxième fluide caloporteur étant à l'état liquide. En sortie 104 le deuxième fluide caloporteur est aiguillé vers la branche 13b comprenant le détendeur 6 par un moyen d'aiguillage telle une vanne 19. Le détendeur 6 est alimenté en deuxième fluide caloporteur à l'état liquide. Le détendeur 6 crée une restriction induisant une chute de pression du deuxième fluide caloporteur. À la sortie 106 du détendeur 6, le deuxième fluide caloporteur présente une pression plus basse qu'en entrée 105 ainsi qu'une température plus basse. Le deuxième fluide caloporteur est généralement en mélange diphasique. Le deuxième fluide caloporteur est aiguillé vers le deuxième échangeur 4 par des organes d'aiguillage telle une vanne 19 puis traverse ledit deuxième échangeur 4 fonctionnant comme évaporateur. Le deuxième fluide caloporteur à l'état liquide est évaporé dans le deuxième échangeur 4 en absorbant les calories issues d'une source extérieure 9 circulant dans le deuxième échangeur 4. Le deuxième fluide caloporteur à l'état gazeux est alors aspiré par l'entrée 109 du compresseur 5 et le cycle se renouvelle.

La figure 2 illustre un ensemble selon l'invention dans lequel le système thermodynamique comprend un module de Rankine associé à une pompe à chaleur. Dans le cas illustré, le système thermodynamique fonctionne en mode module de Rankine. C'est-à-dire que le deuxième fluide caloporteur circule dans le circuit fluidique en traversant les différents organes du module de Rankine.

Le circuit fluidique de pile 2 comprend une sortie 213 du premier fluide caloporteur hors de la pile 1 qui est connecté fluidiquement à une entrée 201 du premier fluide caloporteur dans le premier échangeur 3. Le premier fluide caloporteur traverse le premier échangeur thermique 3 et ressort par une sortie 202 connectée fluidiquement à une entrée 114 du premier fluide caloporteur dans la pile 1.

Le circuit fluidique thermodynamique 18, dit circuit de module de Rankine est décrit ci-après, une sortie 204 du deuxième fluide caloporteur du premier échangeur thermique 3 est connectée fluidiquement à une entrée 205 de la turbine 8. Le deuxième fluide caloporteur ressort de la turbine 8 par une sortie 206 connectée fluidiquement à une entrée 207 du deuxième échangeur 4. Le deuxième fluide caloporteur ressort du deuxième échangeur 4 par une sortie 208 connectée fluidiquement à une entrée 209 de la pompe 7. Le deuxième fluide caloporteur ressort de la pompe 7 par une sortie 210 connectée fluidiquement à une entrée 203 du premier échangeur thermique 3. Avantageusement, les connexions fluidiques entre les différents organes comprennent des organes d'aiguillage tels que des vannes 19 du type vannes trois voies permettant d'aiguiller le deuxième fluide caloporteur dans les branches 13a, ou 13b et 14a ou 14b. Au niveau du deuxième échangeur thermique 4 circule une source extérieure 9 pénétrant dans le deuxième échangeur 4 par une entrée 211 et ressort du deuxième échangeur 4 par une sortie 212. La source extérieure 9 peut être la même que celle précédemment décrite.

En fonctionnement, l'ensemble selon l'invention suivant le cas de la figure 2 permet l'évacuation de l'énergie thermique produite par la pile 1 et sa valorisation notamment en énergie mécanique.

Le deuxième fluide caloporteur traverse le premier échangeur 3 fonctionnant en évaporateur. Lors de son passage dans l'évaporateur 3, le deuxième fluide caloporteur récupère de l'énergie thermique c'est-à-dire des calories et se vaporise. Le deuxième fluide caloporteur change d'état. Dans le premier échangeur 3, le premier fluide caloporteur circule et transmet les calories au deuxième fluide caloporteur de sorte à les évacuer de la pile 1. Le deuxième fluide caloporteur est aiguillé vers la branche 14a comprenant la turbine 8 par un moyen d'aiguillage telle une vanne 19. La turbine 8 est alimentée en deuxième fluide caloporteur à l'état gazeux. La turbine 8 également dénommée expandeur permet de détendre le deuxième fluide caloporteur de haute pression à basse pression en entraînant un arbre de rotation générant de l'énergie mécanique pouvant être transformée en l'énergie électrique notamment par un alternateur 11. À la sortie 206 de la turbine, le deuxième fluide caloporteur présente une pression plus basse qu'en entrée 205 ainsi qu'une température plus basse. Le deuxième fluide caloporteur est aiguillé vers le deuxième échangeur 4 par des organes d'aiguillage telle une vanne 19 puis traverse ledit deuxième échangeur 4 fonctionnant comme condenseur. Le deuxième fluide caloporteur à l'état gazeux est condensé dans le deuxième échangeur 4 en libérant les calories vers une source extérieure 9 circulant dans le deuxième échangeur 4. Le deuxième fluide caloporteur à l'état liquide ressort par la sortie 208 et est aiguillé vers la branche 13a comprenant la pompe 7 par un moyen d'aiguillage telle une vanne 19 permettant de mettre en circulation le deuxième fluide caloporteur dans le circuit fluidique thermodynamique. Le fluide caloporteur ressort de la pompe pour pénétrer dans le premier échangeur thermique 3 et le cycle se renouvelle.

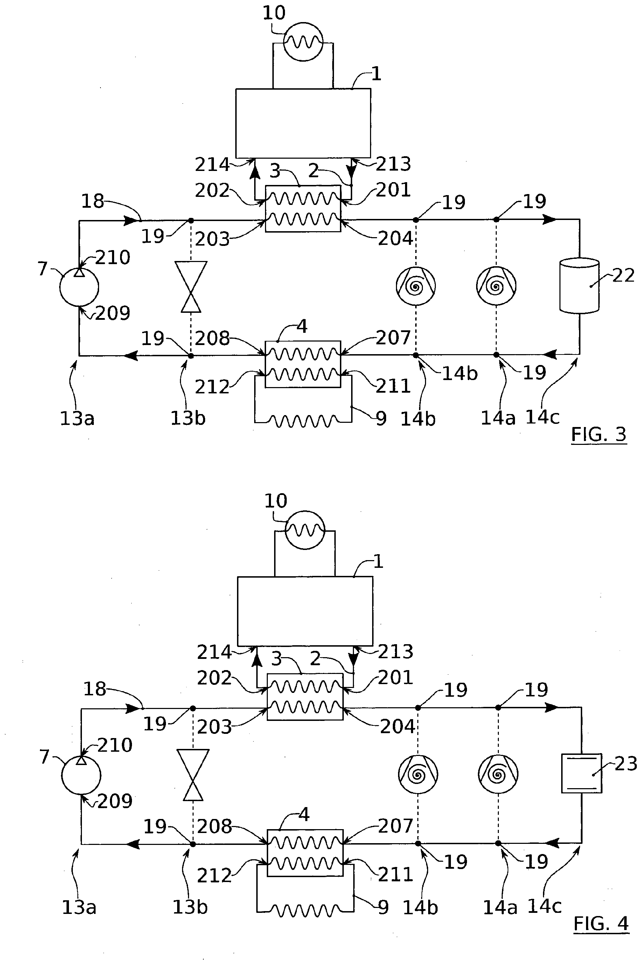

La figure 3 et la figure 4 illustrent des variantes du premier mode de réalisation dans lesquelles l'ensemble selon l'invention comprend de manière complémentaire des moyens de stockage de l'énergie thermique produite par la pile à combustible ou des modules d'utilisation de l'énergie thermique permettant l'utilisation directe de l'énergie thermique. A titre d'exemple, les moyens de stockage illustrés en figure 3 comprennent des ballasts d'eau 22 qui sont chauffés et stockent l'énergie thermique, d'autres types de stockage thermique tels que des Matériaux à changement de Phase peuvent également être utilisés. Tels qu'illustrés sur la figure 3, les moyens de stockage sont disposés sur le circuit fluidique thermodynamique 18 en parallèle de la turbine 8 et du compresseur 5. Les moyens de stockage sont disposés sur une branche parallèle 14c.

Préférentiellement, la branche 14c est connectée au circuit fluidique thermodynamique par des organes d'aiguillage tels que des vannes trois voies 19.

De la même manière, la figure 4 illustre l'agencement de modules d'utilisation de l'énergie thermique comme par exemple un four ou un chauffage 23.

Suivant un deuxième mode de réalisation, le système thermodynamique comprend un moteur Stirling réversible. Le moteur Stirling est configuré pour alternativement produire de l'énergie mécanique à partir de l'énergie thermique produite par la pile à combustible 1 et fournir de l'énergie thermique à la pile à combustible à partir d'énergie mécanique.

Comme dans le premier mode de réalisation, l'ensemble comprend le circuit fluidique de pile 2 agencé au contact de la pile 1 et plus précisément de la membrane de la pile 1.

De même, le système thermodynamique comprend le circuit fluidique thermodynamique 18, le premier échangeur 3 et le deuxième échangeur 4. Le premier échangeur 3 permet l'échange d'énergie thermique entre le circuit de fluidique thermodynamique 12 et le circuit fluidique de pile 2. De même, le deuxième échangeur 4 permet l'échange d'énergie thermique entre le circuit de fluidique thermodynamique 18 et une source extérieure 9, notamment telle que précédemment décrite.

Le moteur Stirling 15 comprend une enceinte recevant un fluide de travail et au moins un piston 25.

Différents types de moteurs Stirling existent. Selon l'invention, on préférera utiliser un moteur de type alpha car il offre un rapport de puissance-volume élevé adapté aux contraintes d'intégration, un rendement amélioré grâce à la présence d'un régénérateur ainsi qu'une dissociation nette des sources chaude et froide.

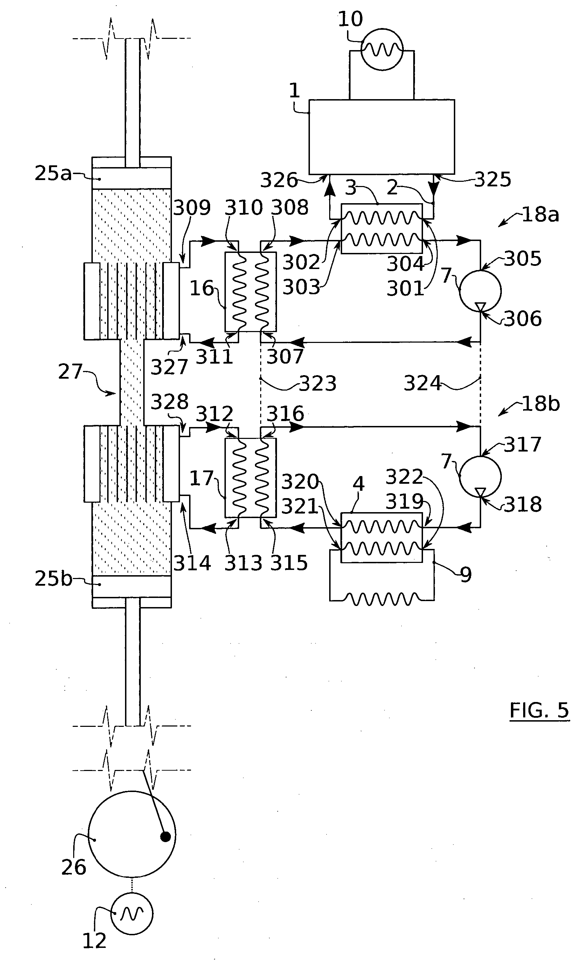

Le moteur Stirling 15 tel que représenté aux figures 5 à 7 correspond à un type alpha. Le moteur Stirling comprend une zone chaude 20 formée dans une première chambre recevant un premier piston 25a et une zone froide 21 formée dans une deuxième chambre recevant un deuxième piston 25a. Le fluide de travail est déplacé entre ces deux zones soit par les pistons 25a 25b en mode pompe à chaleur c'est-à-dire production d'énergie thermique soit par des variations de volume du fluide de travail actionnant les pistons 25a et 25b lors de la production d'énergie mécanique. Les pistons 25a et 25b sont relié à une roue 26 éventuellement reliée à un alternateur 11 pour produire de l'électricité ou une alimentation électrique 12 pour actionner la roue 26.

Préférentiellement, le circuit fluidique thermodynamique 18 comprend une première boucle 18a et une deuxième boucle 18b. Avantageusement, lors de l'étape de démarrage et préférentiellement également lors de l'étape de fonctionnement permettant la transformation de l'énergie thermique en énergie mécanique, la première boucle 18a et la deuxième boucle 18b ne sont pas connectées fluidiquement. La première boucle 18a et la deuxième boucle 18b forment des circuits fluidiques indépendants. Préférentiellement, le fluide caloporteur circulant dans les deux boucles 18a et 18b est identique.

Selon l'invention, le circuit fluidique thermodynamique 18 échange de l'énergie thermique avec le moteur Stirling 15. Plus précisément, la première boucle 18a échange de l'énergie thermique avec la zone chaude 20 du moteur Stirling 15 et la deuxième boucle 18b échange de l'énergie thermique avec la zone froide 21 du moteur Stirling 15.

La première boucle 18a comprend le premier échangeur 3 et la deuxième bouche 18b comprend le deuxième échangeur 4.

L'échange thermique entre le deuxième fluide caloporteur de la première boucle 18a et la zone chaude 20 peut se faire directement par circulation du deuxième fluide caloporteur autour de la zone chaude 20. De même, l'échange thermique entre le deuxième fluide caloporteur de la deuxième boucle 18b et la zone froide 21 peut se faire directement par circulation du deuxième fluide caloporteur autour de la zone froide 21.

Avantageusement, suivant une autre possibilité, notamment illustrée aux figures 5 à 7, le système thermodynamique comprend un troisième échangeur thermique 16 et un quatrième échangeur thermique 17.Ainsi, l'échange thermique entre le deuxième fluide caloporteur de la première boucle 18a et la zone chaude 20 se fait par le troisième échangeur thermique. Un fluide caloporteur circule autour de la zone chaude 20, puis échange avec le deuxième fluide caloporteur de la première boucle 18a par le troisième échangeur 16. De même, l'échange thermique entre le deuxième fluide caloporteur de la deuxième boucle 18b et la zone froide 21 se fait par le quatrième échangeur thermique 17. Un fluide caloporteur circule autour de la zone froide 21, puis échange avec le deuxième fluide caloporteur de la deuxième boucle 18b par le quatrième échangeur thermique 17.

La première boucle 18a comprend le premier échangeur 3 et le troisième échangeur 16 et avantageusement une pompe 7 configurée pour mettre en circulation le deuxième fluide caloporteur dans la première boucle 18a du circuit fluidique thermodynamique 18. Le troisième échangeur 16 est configuré pour échanger l'énergie thermique entre le circuit fluidique thermodynamique et plus précisément la première boucle 18a et le moteur Stirling 15 plus précisément la zone chaude 20 du moteur.

La deuxième boucle 18b comprend le deuxième échangeur 4 et le quatrième échangeur 17 et avantageusement une pompe 7 configurée pour mettre en circulation le deuxième fluide caloporteur dans le circuit fluidique thermodynamique. Le quatrième échangeur 17 est configuré pour échanger l'énergie thermique entre le circuit fluidique thermodynamique et plus précisément la deuxième boucle 18b et le moteur Stirling 15 plus précisément la zone froide 21 du moteur.

La figure 5 illustre l'étape de démarrage de la pile à combustible dans lequel de l'énergie thermique est fournie à la pile à combustible par le système thermodynamique. L'agencement de l'ensemble selon l'invention et son fonctionnement sont décrits ci-après au regard de la figure 5.

La pile à combustible pour démarrer doit être alimentée en énergie thermique. L'ensemble comprend un circuit fluidique de pile 1. Le circuit fluidique de pile 1 comprend un premier fluide caloporteur sortant de la pile 1 par une sortie 325 de premier fluide caloporteur connectée fluidiquement à une entrée 301 du premier fluide caloporteur dans le premier échangeur 3. Le premier fluide caloporteur traverse le premier échangeur 3 et ressort par une sortie 303 connectée fluidiquement à une entrée 326 du premier fluide caloporteur dans la pile 1.

Le circuit fluidique thermodynamique comprend la première boucle 18a comprenant une entrée du deuxième fluide caloporteur 303 dans le premier échangeur 3. Le deuxième fluide caloporteur traverse le premier échangeur 3 et ressort par une sortie 304 connectée fluidiquement à une entrée 305 du deuxième fluide caloporteur dans la pompe 7 qui envoie le deuxième fluide caloporteur depuis sa sortie 306 vers le troisième échangeur 16 avec lequel elle est connectée fluidiquement par son entrée 307. Le deuxième fluide caloporteur 16 traverse le troisième échangeur thermique 16. Le deuxième fluide caloporteur ressort du troisième échangeur thermique 16 par une sortie 308 avantageusement connectée fluidiquement à une entrée 303 du premier échangeur thermique 3.

La deuxième boucle 18b comprend le deuxième échangeur thermique 4 dans lequel pénètre le deuxième fluide caloporteur par une entrée 319. Le deuxième fluide caloporteur traverse le deuxième échangeur 4 et ressort par une sortie 320 avantageusement connectée fluidiquement à l'entrée 315 du quatrième échangeur 17. Le deuxième fluide caloporteur traverse le quatrième échangeur 17 et ressort par une sortie 316 connectée fluidiquement à l'entrée 317 d'une pompe 7 qui met en circulation le deuxième fluide caloporteur dans la deuxième boucle 18b. Le deuxième fluide caloporteur ressort de la pompe par une sortie 318 connectée fluidiquement à l'entrée 319 du deuxième échangeur 4.

Les circuits de fluide du troisième échangeur thermique et du quatrième échangeur thermique 17 destinés à échanger avec la zone chaude 20 et la zone froide 21 du moteur Stirling 15 sont décrit ci-après.

Le circuit du troisième échangeur 16 comprend une sortie 309 du fluide caloporteur autour du moteur Stirling connectée fluidiquement à l'entrée 310 du fluide de travail du troisième échangeur 16. Le fluide de travail traverse le troisième échangeur 16 et ressort par une sortie 311 connectée fluidiquement à l'entrée 327 du fluide caloporteur autour de la zone chaude 20. Le fluide caloporteur circule autour de la zone chaude 20 et ressort par la sortie 309.

Le circuit du quatrième échangeur 17 comprend une sortie 328 du fluide caloporteur autour du moteur Stirling connectée fluidiquement à l'entrée 312 du fluide de travail du quatrième échangeur 17. Le fluide de travail traverse le quatrième échangeur 17 et ressort par une sortie 313 connectée fluidiquement à l'entrée 314 du fluide caloporteur autour de la zone froide 21. Le fluide caloporteur circule autour de la zone froide 21 et ressort par la sortie 312.

Avantageusement, le moteur Stirling est relié à une alimentation électrique 12 destinée à fournir une énergie mécanique au moteur Stirling 15. Dans ce cas le moteur Stirling fonctionne comme une pompe à chaleur.

De la chaleur est récupérée depuis la source extérieure 9 pour la fournir à la pile à combustible.

Au niveau du deuxième échangeur 4, le deuxième fluide caloporteur récupère de l'énergie thermique de la source extérieure 9. Le deuxième fluide caloporteur réchauffé transmet son énergie thermique au fluide de travail du moteur Stirling soit par circulation du deuxième fluide caloporteur autour de la zone froide 21 du moteur ou bien au travers du quatrième échangeur 17 dans lequel circule le deuxième fluide caloporteur et le fluide caloporteur intermédiaire. Le deuxième fluide caloporteur refroidi pénètre ensuite dans la pompe 7 pour être renvoyé vers le deuxième échangeur 4. Le fluide de travail réchauffé dans la zone froide 21 se dilate. L'énergie mécanique pour déplacer le piston 25b est fournie par une alimentation électrique 12 configurée pour faire tourner une roue 26 actionnant le piston 25b. Le piston 25 est déplacé vers la zone chaude 20, déplaçant ainsi le fluide de travail chaud vers la zone chaude. Au niveau de la zone chaude 20, le fluide de travail transmet son énergie thermique au deuxième fluide caloporteur de la première boucle 18a soit directement par contact du deuxième fluide caloporteur avec la zone chaude 20 soit par le troisième échangeur thermique 16 dans lequel circule le fluide caloporteur intermédiaire et le deuxième fluide caloporteur. Le fluide de travail se refroidit. L'énergie électrique permettant l'actionnement du piston 25 entraine celui-ci vers la zone froide 21 entrainant ainsi le fluide de travail refroidi vers la zone froide 21 pour être à nouveau chauffé. Le deuxième fluide caloporteur réchauffé par le fluide de travail pénètre dans le premier échangeur thermique 2 de sorte à transférer son énergie thermique au premier fluide caloporteur et ainsi fournir de l'énergie thermique à la pile 1.

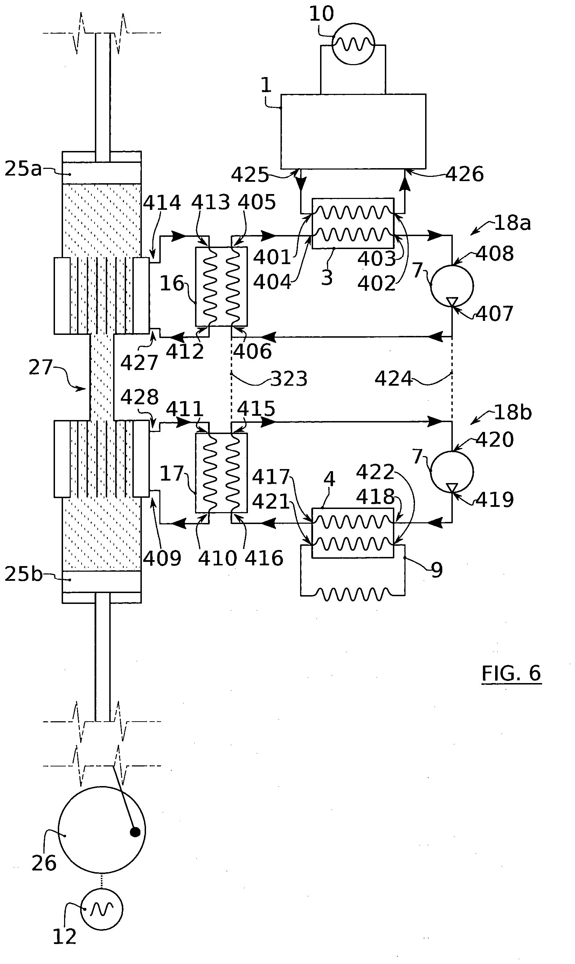

La figure 6 illustre l'étape de fonctionnement de la pile à combustible dans lequel de l'énergie thermique est produite par la pile à combustible et évacuée et valorisée par le système thermodynamique. L'agencement de l'ensemble selon l'invention et son fonctionnement sont décrits ci-après au regard de la figure 6.

La pile à combustible 1 comprend module de production d'énergie électrique 10 à partir du flux d'électrons produit par la pile 1. La pile à combustible produit de l'énergie thermique. L'ensemble comprend un circuit fluidique de pile 1. Le circuit fluidique de pile 1 comprend un premier fluide caloporteur sortant de la pile 1 par une sortie 425 de premier fluide caloporteur connectée fluidiquement à une entrée 401 du premier fluide caloporteur dans le premier échangeur 3. Le premier fluide caloporteur traverse le premier échangeur 3 et ressort par une sortie 403 connectée fluidiquement à une entrée 426 du premier fluide caloporteur dans la pile 1.

Le circuit fluidique thermodynamique comprend la première boucle 18a comprenant une entrée du deuxième fluide caloporteur 403 dans le premier échangeur 3. Le deuxième fluide caloporteur traverse le premier échangeur 3 et ressort par une sortie 404 connectée fluidiquement à une entrée 405 du deuxième fluide caloporteur dans le troisième échangeur thermique 16 qu'il traverse. Le deuxième fluide caloporteur ressort du troisième échangeur thermique 16 par un une sortie 406 avantageusement connectée fluidiquement à une entrée 407 d'une pompe 7 qui renvoie le deuxième fluide caloporteur depuis sa sortie 408 vers le premier échangeur 3 avec lequel elle est connectée fluidiquement par son entrée 403.

La deuxième boucle 18b comprend le deuxième échangeur thermique 4 dans lequel pénètre le deuxième fluide caloporteur par une entrée 417. Le deuxième fluide caloporteur traverse le deuxième échangeur 4 et ressort par une sortie 418 avantageusement connectée fluidiquement à l'entrée 419 d'une pompe 420 qui met en circulation le deuxième fluide caloporteur dans la deuxième boucle 18b. Le deuxième fluide caloporteur ressort de la pompe par une sortie 420 connectée fluidiquement à l'entrée 415 du quatrième échangeur 17. Le deuxième fluide caloporteur travers le quatrième échangeur 17 et ressort par une sortie 416 connectée fluidiquement à l'entrée 417 du deuxième échangeur 4.

Le circuit du troisième échangeur 16 comprend une sortie 427 du fluide caloporteur autour du moteur Stirling connectée fluidiquement à l'entrée 312 du fluide de caloporteur du troisième échangeur 16. Le fluide de caloporteur traverse le troisième échangeur 16 et ressort par une sortie 413 connectée fluidiquement à l'entrée 414 du fluide caloporteur autour de la zone chaude 20. Le fluide caloporteur circule autour de la zone chaude 20 et ressort par la sortie 417.

Le circuit du quatrième échangeur 17 comprend une sortie 409 du fluide caloporteur autour du moteur Stirling connectée fluidiquement à l'entrée 410 du fluide de caloporteur du quatrième échangeur 17. Le fluide de caloporteur traverse le quatrième échangeur 17 et ressort par une sortie 411 connectée fluidiquement à l'entrée 428 du fluide caloporteur autour de la zone froide 21. Le fluide caloporteur circule autour de la zone froide 21 et ressort par la sortie 409.

Avantageusement, le moteur Stirling est relié à un alternateur 11 ou un compresseur ou permettant notamment la transformation de l'énergie mécanique du moteur Stirling en énergie électrique.

En fonctionnement, l'ensemble décrit ci-dessus au regard de la figure 6 permet d'évacuer l'énergie thermique de la pile pour la transformer en énergie mécanique, voire électrique, au niveau du moteur Stirling.

La chaleur produite par la pile à combustible est récupérée par le premier fluide caloporteur au niveau de la pile et circule dans le circuit de fluide de pile. Le premier fluide caloporteur cédé son énergie thermique c'est-à-dire ses calories au deuxième fluide caloporteur lorsqu'il travers le premier échangeur thermique 3. Le deuxième fluide caloporteur traversant le premier échangeur thermique 3 va se réchauffer. Il ressort du premier échangeur 3 à une température plus élevée que celle qu'il avait en entrée. Le deuxième fluide caloporteur pénètre alors dans le troisième échangeur de chaleur 16 permettant de transférer l'énergie thermique du deuxième fluide caloporteur vers le fluide de travail du moteur Stirling 15. Selon une possibilité le troisième échangeur de chaleur comprend la circulation du fluide caloporteur intermédiaire au contact extérieur de la zone chaude 20 du moteur Stirling 15.

Selon la possibilité illustrée, le deuxième fluide caloporteur transmet son énergie thermique au fluide caloporteur intermédiaire circulant dans le troisième échangeur 16, le fluide caloporteur intermédiaire remonte en température avant de pénétrer dans la zone chaude 20 du moteur Stirling. Le deuxième fluide caloporteur ressort du troisième échangeur refroidi et circule au travers de la pompe 7 avant d'être renvoyé vers l'entrée 403 du premier échangeur 3.

Avantageusement, le système thermodynamique comprend la deuxième boucle 18b destinée à augmenter les différences de températures entre le fluide de travail dans la zone chaude 20 et dans la zone froide 21 du moteur Stirling 15. Dans la boucle 18b, le deuxième fluide caloporteur traverse un deuxième échangeur 4 traversé également par une source extérieure 9. Dans ce cas, la source extérieure 9 est froide c'est-à-dire qu'elle présente une température inférieure à la température du deuxième fluide circulant dans le deuxième échangeur 4. La source extérieure 9 est telle que décrite précédemment. Le deuxième fluide caloporteur traversant le deuxième échangeur 4 se refroidit avant d'entrer en contact avec le fluide de travail du moteur Stirling 15 préférentiellement au niveau du quatrième échangeur 17 ou au niveau de la zone froide 21 du moteur Stirling, le deuxième fluide caloporteur circulant autour de la zone froide 21. Le deuxième fluide caloporteur récupère l'énergie thermique du fluide de travail de la zone froide 21 de sorte à abaisser la température du fluide de travail dans cette zone 21. Le deuxième fluide caloporteur ressort du quatrième échangeur ou du contact avec la zone froide 21 a une température plus élevée que sa température d'entrée. Le deuxième fluide caloporteur traverse ensuite une pompe 7 destinée à renvoyer le deuxième fluide caloporteur vers le deuxième échangeur 4. Au niveau du moteur Stirling, le fluide de travail qui est chauffé par le deuxième fluide caloporteur au niveau de la zone chaude 20 se dilate augmentant son volume et poussant le piston 25 en direction de la zone froide 21. Le fluide de travail qui se trouve alors dans la zone froide 21 se refroidit par échange avec le deuxième fluide caloporteur de la deuxième boucle 18b. Le refroidissement du fluide de travail entraine sa contraction, le piston 25 est alors repoussé vers la zone chaude 20 et ainsi de suite. Le mouvement de translation du piston 25 est transmis à une roue 26 reliée avantageusement à un alternateur 11.

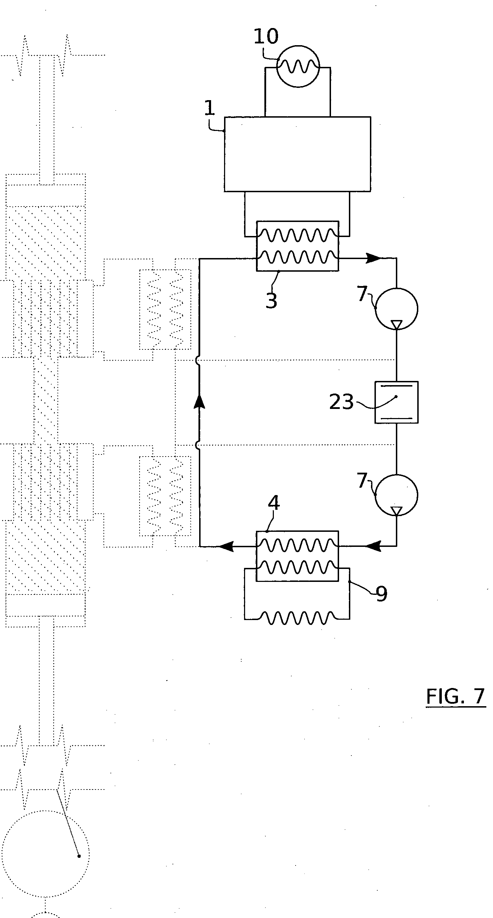

Suivant un mode de réalisation alternatif du deuxième mode de réalisation, le circuit fluidique thermodynamique comprend des branches de connexions 323, 324, 423,424 permettant de mettre en connexion fluidique la première boucle 18a et la deuxième boucle 18b, notamment dans le cas illustré à la figure 7 de sorte à sortir du circuit fluidique le moteur Stirling et prévoir sur une branche de connexion un moyen de stockage d'énergie thermique du type ballaste d'eau 22 ou des modules d'utilisation directe de l'énergie thermique comme un four ou un chauffage 23.

### REFERENCES

- 1.: pile à combustible
- 2.: circuit fluidique de pile
- 3.: premier échangeur
- 4.: deuxième échangeur
- 5.: compresseur
- 6.: détendeur
- 7.: pompe
- 8.: turbine
- 9.: source
- 10.: module de production électricité
- 11.: alternateur
- 12.: alimentation électrique
- 13.: a. b . branche parallèle
- 14.: a. b. branche parallèle
- 15.: moteur Stirling
- 16.: troisième échangeur
- 17.: quatrième échangeur
- 18.: circuit fluidique thermodynamique
18a. première boucle
18b. deuxième boucle
19. Vannes trois voies
20. Zone chaude
21. Zone froide
22. Ballaste d'eau
23. Four ou chauffage
24. Circuit de fluide de travail
25. a Piston - 25. b piston
26. roue
27. communication entre la zone chaude et la zone froide
101. entrée premier fluide caloporteur dans le premier échangeur
102. sortie premier fluide caloporteur du premier échangeur
103. entrée deuxième fluide caloporteur dans le premier échangeur
104. sortie deuxième fluide caloporteur du premier échangeur
105. entrée deuxième fluide caloporteur dans le détendeur
106. sortie deuxième fluide caloporteur du détendeur
107. entrée deuxième fluide caloporteur dans le deuxième échangeur
108. sortie deuxième fluide caloporteur du deuxième échangeur
109. entrée deuxième fluide caloporteur dans le compresseur
110. sortie deuxième fluide caloporteur du compresseur
111. entrée source dans le deuxième échangeur
112. sortie source du deuxième échangeur4
113. sortie du premier fluide caloporteur de la pile
114. entrée du premier fluide caloporteur dans la pile
201. entrée premier fluide caloporteur dans le premier échangeur
202. sortie premier fluide caloporteur du premier échangeur
203. entrée deuxième fluide caloporteur dans le premier échangeur
204. sortie deuxième fluide caloporteur du premier échangeur
205. entrée deuxième fluide caloporteur dans la turbine
206. sortie deuxième fluide caloporteur dans la turbine
207. entrée deuxième fluide caloporteur dans le deuxième échangeur
208. sortie deuxième fluide caloporteur du deuxième échangeur
209. entrée deuxième fluide caloporteur dans la pompe
210. sortie deuxième fluide caloporteur de la pompe
211. entrée source dans le deuxième échangeur
212. sortie source du deuxième échangeur
213. sortie du premier fluide caloporteur de la pile
214. entrée du premier fluide caloporteur dans la pile
301. entrée premier fluide caloporteur dans le premier échangeur
302. sortie premier fluide caloporteur du premier échangeur
303. entrée deuxième fluide caloporteur dans le premier échangeur
304. sortie deuxième fluide caloporteur du premier échangeur
305. entrée deuxième fluide caloporteur dans la pompe
306. sortie deuxième fluide caloporteur de la pompe
307. entrée deuxième fluide caloporteur dans le troisième échangeur
308. sortie deuxième fluide caloporteur du troisième échangeur
309. sortie fluide de travail du moteur Stirling
310. entrée fluide de travail dans le troisième échangeur
311. sortie fluide de travail du troisième échangeur
312. entrée fluide de travail dans le quatrième échangeur
313. sortie fluide de travail du quatrième échangeur
314. entrée fluide de travail du moteur Stirling
315. entrée deuxième fluide caloporteur dans le quatrième échangeur
316. sortie deuxième fluide caloporteur du quatrième échangeur
317. entrée deuxième fluide caloporteur dans la pompe
318. sortie deuxième fluide caloporteur de la pompe
319. entrée deuxième fluide caloporteur dans le deuxième échangeur
320. sortie deuxième fluide caloporteur du deuxième échangeur
321. entrée source dans le deuxième échangeur
322. sortie source du deuxième échangeur
323. branche de connexion
324. branche de connexion
325. sortie du premier fluide caloporteur de la pile
326. entrée du premier fluide caloporteur dans la pile
327. entrée fluide caloporteur intermédiaire autour de la zone chaude
328. sortie fluide caloporteur intermédiaire de la zone froide
401. entrée premier fluide caloporteur dans le premier échangeur
402. sortie premier fluide caloporteur du premier échangeur
403. entrée deuxième fluide caloporteur dans le premier échangeur
404. sortie deuxième fluide caloporteur du premier échangeur
405. entrée deuxième fluide caloporteur dans le troisième échangeur
406. sortie deuxième fluide caloporteur du troisième échangeur
407. entrée deuxième fluide caloporteur dans la pompe
408. sortie deuxième fluide caloporteur de la pompe
409. sortie fluide de travail du moteur Stirling
410. entrée fluide de travail dans le quatrième échangeur
411. sortie fluide de travail du quatrième échangeur
412. entrée fluide de travail dans le troisième échangeur
413. sortie fluide de travail du troisième échangeur
414. entrée fluide de travail du moteur Stirling
415. entrée deuxième fluide caloporteur dans le quatrième échangeur
416. sortie deuxième fluide caloporteur du quatrième échangeur
417. entrée deuxième fluide caloporteur dans le deuxième échangeur
418. sortie deuxième fluide caloporteur du deuxième échangeur
419. entrée deuxième fluide caloporteur dans la pompe
420. sortie deuxième fluide caloporteur de la pompe
421. entrée source dans le deuxième échangeur
422. sortie source du deuxième échangeur
423. branche de connexion
424. branche de connexion
425. sortie du premier fluide caloporteur de la pile
426. entrée du premier fluide caloporteur dans la pile
427. sortie du fluide caloporteur intermédiaire de la zone chaude
428. entrée du fluide caloporteur intermédiaire autour de la zone froide.

## Revendications

1. Ensemble de production d'énergie comprenant une pile à combustible (1), un circuit fluidique de pile (2) configuré pour recevoir un premier fluide caloporteur et agencé au moins partiellement autour de la pile à combustible (1) **caractérisé en ce que**
l'ensemble comprend un système thermodynamique réversible configuré pour alternativement :
- évacuer l'énergie thermique produite par la pile à combustible (1) et la transformer en énergie mécanique au travers du premier fluide caloporteur, et
- apporter de l'énergie thermique à la pile à combustible (1) au travers du premier fluide caloporteur,
le système thermodynamique comprenant :
- un circuit fluidique thermodynamique (18) configuré pour recevoir un deuxième fluide caloporteur,
- un premier échangeur (3) destiné à échanger de l'énergie thermique entre le circuit fluidique thermodynamique (18) et le circuit fluidique de pile (2), et
- un deuxième échangeur (4) destiné à échanger de l'énergie thermique entre le circuit fluidique thermodynamique (18) et une source extérieure.

2. Ensemble selon la revendication précédente dans lequel le système thermodynamique réversible comprend au moins un module de production d'énergie thermique connecté au premier échangeur thermique (3).

3. Ensemble selon l'une quelconque des deux revendications précédentes dans lequel le module de production d'énergie thermique est connecté fluidiquement et/ou thermiquement au premier échangeur (3) par le circuit fluidique thermodynamique (18) de sorte à échanger l'énergie thermique produite par le module de production d'énergie thermique vers le circuit fluidique de pile (2).

4. Ensemble selon l'une quelconque des revendications précédentes dans lequel le système thermodynamique réversible comprend un système associant un module à Cycle Organique de Rankine et une pompe à chaleur, de préférence la pompe à chaleur comprend un compresseur (5) et un détendeur (6) agencés en série avec le premier échangeur (3) et le deuxième échangeur (4) et de préférence le module à cycle organique de Rankine comprend une turbine (8) et moins une pompe (7) destinée à faire circuler le deuxième fluide caloporteur dans le circuit fluidique thermodynamique (18), la turbine (8) et la pompe (7) étant agencées en série avec le premier échangeur (3) et le deuxième échangeur (4), de préférence le compresseur (5) est agencé en parallèle de la turbine (8) et la pompe (7) est agencée en parallèle du détendeur (6).

5. Ensemble selon la revendication précédente dans lequel le circuit fluidique thermodynamique (18) comprend un circuit de pompe à chaleur mettant en connexion fluidique successivement le premier échangeur (3), le détendeur (6), le deuxième échangeur (4), le compresseur (5) et à nouveau le premier échangeur (3), de préférence le circuit fluidique thermodynamique (18) comprend un circuit de module à cycle organique de Rankine mettant en connexion fluidique successivement le premier échangeur (3), la turbine (8), le deuxième échangeur (4), la pompe (7) et à nouveau le premier échangeur (3).

6. Ensemble selon l'une quelconque des trois revendications précédentes comprenant des organes d'aiguillage du deuxième fluide caloporteur alternativement vers la turbine (8) ou le compresseur (5) et vers la pompe (7) ou le détendeur (6).

7. Ensemble selon la revendication 1 dans lequel le système thermodynamique réversible comprend un moteur Stirling (15) réversible configuré pour alternativement produire de l'énergie mécanique à partir d'énergie thermique et produire de l'énergie thermique à partir d'énergie mécanique.

8. Ensemble selon la revendication précédente dans lequel le circuit fluidique thermodynamique (18) comprend une première boucle (18a) et une deuxième boucle (18b), la première boucle (18a) configurée pour permettre la circulation du deuxième fluide caloporteur entre le premier échangeur (3) et une zone chaude (20) du moteur Stirling (15), la deuxième boucle (18b) configurée pour permettre la circulation du deuxième fluide caloporteur entre le deuxième échangeur (4) et une zone froide (21) du moteur Stirling (15).

9. Ensemble selon la revendication précédente comprenant un troisième échangeur (16) thermique agencé sur la première boucle configuré pour échanger de l'énergie thermique entre le deuxième fluide caloporteur de la première boucle (18a) et un fluide caloporteur intermédiaire configuré pour circuler autour de la zone chaude (20) du moteur Stirling (15), et un quatrième échangeur (17) thermique agencé sur la deuxième boucle (18b) configuré pour échanger de l'énergie thermique entre le deuxième fluide caloporteur de la deuxième boucle (18b) et le fluide caloporteur intermédiaire configuré pour circuler autour de la zone froide (21) du moteur Stirling (15).

10. Ensemble selon l'une quelconque des revendications précédentes dans lequel la pile à combustible (1) est du type à membrane échangeuse de proton à haute température.

11. Ensemble selon l'une quelconque des revendications précédentes comprenant un module de production d'énergie associé à la pile à combustible (1) configuré pour produire de l'électricité à partir du flux d'électrons produit par la pile à combustible (1).

12. Procédé de production d'énergie par un ensemble de production d'énergie selon l'une quelconque des revendications précédentes comprenant les étapes suivantes
- de démarrage de la pile à combustible (1) par un apport d'énergie thermique à la pile
- de fonctionnement de la pile à combustible (1) générant un courant électrique et de l'énergie thermique
**caractérisé en ce que** lors de l'étape de démarrage, un système thermodynamique réversible apporte de l'énergie thermique à la pile à combustible (1) au travers d'un premier fluide caloporteur et que lors de l'étape de fonctionnement, ledit système thermodynamique réversible évacue l'énergie thermique produite par la pile à combustible (1) au travers du premier fluide caloporteur et la transforme en énergie mécanique au travers d'un deuxième fluide caloporteur.

13. Procédé selon la revendication précédente dans lequel lors de l'étape de démarrage, un premier échangeur (3) thermique transmet de l'énergie thermique d'un deuxième fluide caloporteur circulant dans un circuit fluidique thermodynamique (18) à un premier fluide caloporteur circulant dans un circuit fluidique de pile (2).

14. Procédé selon l'une quelconque des deux revendications précédentes dans lequel lors de l'étape de démarrage, un deuxième échangeur (4) thermique transmet de l'énergie thermique d'une source extérieure au deuxième fluide caloporteur circulant dans le circuit fluidique thermodynamique (18).

15. Procédé selon la revendication précédente dans lequel le système thermodynamique comprend un module à cycle organique de Rankine fonctionnant lors de l'étape de fonctionnement de la pile à combustible (1) et configuré pour transformer la chaleur produite en énergie électrique, le module à cycle organique de Rankine étant associé à une pompe à chaleur fonctionnant lors de l'étape de démarrage de la pile à combustible (1) et configuré pour fournir de l'énergie thermique à la pile à combustible (1).

16. Procédé selon la revendication précédente dans lequel lors de l'étape de démarrage de la pile à combustible (1), le deuxième fluide caloporteur circule dans le circuit fluidique thermodynamique (18) en passant successivement par le compresseur (5) mettant en circulation le deuxième fluide caloporteur, puis le deuxième fluide caloporteur passe dans le premier échangeur (3) dans lequel le deuxième fluide caloporteur se condense et transfert l'énergie thermique au premier fluide caloporteur pour le démarrage de la pile à combustible (1), puis passe par le détendeur (6) dans lequel le deuxième fluide caloporteur subit une chute de pression, puis passe par le deuxième échangeur (4) dans lequel le deuxième fluide caloporteur s'évapore en récupérant de l'énergie thermique d'une source chaude.

17. Procédé selon l'une quelconque des deux revendications précédentes dans lequel lors de l'étape de fonctionnement de la pile à combustible (1), le deuxième fluide caloporteur circule dans le circuit fluidique thermodynamique (18) en passant successivement par le premier échangeur (3) dans lequel il se vaporise en récupérant l'énergie thermique du premier fluide caloporteur circulant dans le circuit fluidique de pile (2), puis par la turbine (8) dans laquelle le deuxième fluide caloporteur se détend permettant la production d'énergie mécanique, puis par le deuxième échangeur (4) dans lequel le deuxième fluide caloporteur se condense au contact d'une source froide, puis par une pompe (7) dans laquelle le deuxième fluide caloporteur est mis en pression pour être envoyé vers le premier échangeur (3).

18. Procédé selon la revendication 12 dans lequel le système thermodynamique comprend un moteur Stirling (15) réversible configuré pour fournir de l'énergie thermique à la pile à combustible (1) lors de l'étape de démarrage de la pile à combustible (1) et configuré pour transformer la chaleur produite en énergie mécanique lors de l'étape de fonctionnement de la pile à combustible (1).

19. Procédé selon la revendication précédente dans lequel lors de l'étape de démarrage, le deuxième fluide caloporteur récupère de l'énergie thermique au niveau du deuxième échangeur (4) par échange avec source extérieure (9) puis transmet l'énergie thermique à une zone froide (21) du moteur Stirling (15) par échange avec un fluide de travail circulant dans le moteur Stirling (15), un piston (25) actionné par une roue (26) déplace le fluide de travail dans la zone chaude (20), le deuxième fluide caloporteur récupère de l'énergie thermique par échange avec le fluide de travail de la zone chaude (20) du moteur Stirling (15) qu'il transfère au premier fluide caloporteur dans le premier échangeur (3).

20. Procédé selon la revendication précédente dans lequel lors de l'étape de fonctionnement, le deuxième fluide caloporteur récupère de l'énergie thermique au niveau du premier échangeur (3) par échange avec le premier fluide caloporteur puis transmet l'énergie thermique à une zone chaude (20) du moteur Stirling (15) par échange avec un fluide de travail circulant dans le moteur Stirling (15) de sorte à actionner un piston (25) du moteur produisant une énergie mécanique et déplaçant le fluide de travail dans la zone froide (21), le deuxième fluide caloporteur récupérant de l'énergie thermique par échange avec le fluide de travail de la zone froide (21) du moteur Stirling (15).

## Patentansprüche

1. Energieerzeugungsanlage, umfassend eine Brennstoffzelle (1), einen Zellenfluidkreis (2), der konfiguriert ist, um ein erstes Wärmeträgerfluid zu empfangen, und mindestens teilweise um die Brennstoffzelle (1) herum angeordnet, **dadurch gekennzeichnet, dass**
die Anlage ein reversibles thermodynamisches System umfasst, das konfiguriert ist, um abwechselnd:
- die durch die Brennstoffzelle (1) erzeugte Wärmeenergie abzuführen und sie durch das erste Wärmeträgerfluid in mechanische Energie umzuwandeln,
- der Brennstoffzelle (1) durch das erste Wärmeträgerfluid Wärmeenergie zuzuführen,
wobei das thermodynamische System umfasst:
- einen thermodynamischen Fluidkreis (18), der konfiguriert ist, um ein zweites Wärmeträgerfluid zu empfangen,
- einen ersten Austauscher (3), der dazu bestimmt ist, Wärmeenergie zwischen dem thermodynamischen Fluidkreis (18) und dem Zellenfluidkreis (2) auszutauschen, und
- einen zweiten Austauscher (4), der dazu bestimmt ist, Wärmeenergie zwischen dem thermodynamischen Fluidkreis (18) und einer externen Quelle auszutauschen.

2. Anlage nach dem vorstehenden Anspruch, wobei das reversible thermodynamische System mindestens ein Wärmeenergieerzeugungsmodul umfasst, das mit dem ersten Wärmeaustauscher (3) verbunden ist.

3. Anlage nach einem der beiden vorstehenden Ansprüche, wobei das Wärmeenergieerzeugungsmodul fluidisch und/ oder wärmetechnisch durch den thermodynamischen Fluidkreis (18) derart mit dem ersten Austauscher (3) verbunden ist, um die von dem Wärmeenergieerzeugungsmodul erzeugte Wärmeenergie zu dem Zellenfluidkreis (2) hin auszutauschen.

4. Anlage nach einem der vorstehenden Ansprüche, wobei das reversible thermodynamische System ein System umfasst, das ein organisches Rankine-Zyklusmodul und eine Wärmepumpe verknüpft, wobei die Wärmepumpe vorzugsweise einen Verdichter (5) und einen Druckminderer (6) umfasst, die in Reihe mit dem ersten Austauscher (3) und dem zweiten Austauscher (4) angeordnet sind, und das organische Rankine-Zyklusmodul vorzugsweise eine Turbine (8) und mindestens eine Pumpe (7) umfasst, die dazu bestimmt ist, das zweite Wärmeträgerfluid in dem thermodynamischen Fluidkreis (18) zirkulieren zu lassen, wobei die Turbine (8) und die Pumpe (7) in Reihe mit dem ersten Austauscher (3) und dem zweiten Austauscher (4) angeordnet sind, wobei der Verdichter (5) vorzugsweise parallel zur Turbine (8) angeordnet ist, und die Pumpe (7) parallel zum Druckminderer (6) angeordnet ist.

5. Anlage nach dem vorstehenden Anspruch, wobei der thermodynamische Fluidkreis (18) einen Wärmepumpenkreis umfasst, der nacheinander den ersten Austauscher (3), den Druckminderer (6), den zweiten Austauscher (4), den Verdichter (5) und erneut den ersten Austauscher (3) in Fluidverbindung versetzt, wobei der thermodynamische Fluidkreis (18) vorzugsweise ein organisches Rankine-Zyklusmodul umfasst, das nacheinander den ersten Austauscher (3), die Turbine (8), den zweiten Austauscher (4), die Pumpe (7) und erneut den ersten Austauscher (3) in Fluidverbindung versetzt.

6. Anlage nach einem der drei vorstehenden Ansprüche, umfassend Organe zum Schleusen des zweiten Wärmeträgerfluids abwechselnd zu der Turbine (8) oder dem Verdichter (5) und zu der Pumpe (7) oder dem Druckminderer (6).

7. Anlage nach Anspruch 1, wobei das reversible thermodynamische System einen reversiblen Stirling Motor (15) umfasst, der konfiguriert ist, um abwechselnd mechanische Energie aus Wärmeenergie zu erzeugen und Wärmeenergie aus mechanischer Energie zu erzeugen.

8. Anlage nach dem vorstehenden Anspruch, wobei der thermodynamische Fluidkreis (18) eine erste Schleife (18a) und eine zweite Schleife (18b) umfasst, wobei die erste Schleife (18a) konfiguriert ist, um die Zirkulation des zweiten Wärmeträgerfluids zwischen dem ersten Austauscher (3) und einer heißen Zone (20) des Stirling Motors (15) zu ermöglichen, die zweite Schleife (18b) konfiguriert ist, um die Zirkulation des zweiten Wärmeträgerfluids zwischen dem zweiten Austauscher (4) und einer kalten Zone (21) des Stirling Motors (15) zu ermöglichen.

9. Anlage nach dem vorstehenden Anspruch, umfassend einen dritten Wärmeaustauscher (16), der in der ersten Schleife angeordnet ist, der konfiguriert ist, um Wärmeenergie zwischen dem zweiten Wärmeträgerfluid der ersten Schleife (18a) und einem Zwischenwärmeträgerfluid auszutauschen, das konfiguriert ist, um die heiße Zone (20) des Stirling Motors (15) herum zu zirkulieren, und einen vierten Wärmeaustauscher (17), der in der zweiten Schleife (18b) angeordnet ist, um Wärmeenergie zwischen dem zweiten Wärmeträgerfluid der zweiten Schleife (18b) und dem Zwischenwärmeträgerfluid auszutauschen, das konfiguriert ist, um die kalte Zone (21) des Stirling Motors (15) herum zu zirkulieren.

10. Anlage nach einem der vorstehenden Ansprüche, wobei die Brennstoffzelle (1) vom Typ mit Hochtemperatur-Proton-Austausch-Membran ist.

11. Anlage nach einem der vorstehenden Ansprüche, ein der Brennstoffzelle (1) zugeordnetes Energieerzeugungsmodul umfassend, das konfiguriert ist, um aus dem von der Brennstoffzelle (1) erzeugten Elektronenfluss Strom zu erzeugen.

12. Verfahren zur Erzeugung von Energie durch eine Energieerzeugungsanlage nach einem der vorstehenden Ansprüche, die folgenden Schritte umfassend
- Starten der Brennstoffzelle (1) durch Zuführen von Wärmeenergie zur Zelle
- Betreiben der Brennstoffzelle (1), die einen elektrischen Strom und Wärmeenergie generiert,
**dadurch gekennzeichnet, dass** ein reversibles thermodynamisches System beim Schritt des Startens durch ein erstes Wärmeträgerfluid Wärmeenergie zur Brennstoffzelle (1) zuführt, und dass das reversible thermodynamische System beim Schritt des Betreibens die durch die Brennstoffzelle (1) erzeugte Wärmeenergie durch das erste Wärmeträgerfluid abführt, und durch ein zweites Wärmeträgerfluid in mechanische Energie umwandelt.

13. Verfahren nach dem vorstehenden Anspruch, wobei ein erster Wärmeaustauscher (3) beim Schritt des Startens Wärmeenergie aus einem zweiten Wärmeträgerfluid, das in einem thermodynamischen Fluidkreis (18) zirkuliert, in ein erstes Wärmeträgerfluid überträgt, das in dem Zellenfluidkreis (2) zirkuliert.

14. Verfahren nach einem der beiden vorstehenden Ansprüche, wobei ein zweiter Wärmeaustauscher (4) beim Schritt des Startens Wärmeenergie aus einer externen Quelle in das zweite Wärmeträgerfluid überträgt, das in dem thermodynamischen Fluidkreis (18) zirkuliert.

15. Verfahren nach dem vorstehenden Anspruch, wobei das thermodynamische System ein organisches Rankine-Zyklusmodul umfasst, das beim Schritt des Betreibens der Brennstoffzelle (1) betrieben wird, und konfiguriert ist, um die erzeugte Wärme in elektrische Energie umzuwandeln, wobei das organische Rankine-Zyklusmodul einer Wärmepumpe zugeordnet ist, die beim Schritt des Startens der Brennstoffzelle (1) betrieben wird und konfiguriert ist, um der Brennstoffzelle (1) Wärmeenergie bereitzustellen.

16. Verfahren nach dem vorstehenden Anspruch, wobei das zweite Wärmeträgerfluid beim Schritt des Startens der Brennstoffzelle (1) in dem thermodynamischen Fluidkreis (18) zirkuliert, indem es nacheinander durch den Verdichter (5) verläuft, der das zweite Wärmeträgerfluid in Zirkulation versetzt, das zweite Wärmeträgerfluid danach durch den ersten Austauscher (3) verläuft, in dem das zweite Wärmeträgerfluid kondensiert, und die Wärmeenergie auf das erste Wärmeträgerfluid zum Starten der Brennstoffzelle (1) überträgt, danach durch den Druckminderer (6) verläuft, in dem das zweite Wärmeträgerfluid einen Druckabfall erfährt, danach durch den zweiten Austauscher (4) verläuft, in dem das zweite Wärmeträgerfluid verdampft und Wärmeenergie aus einer heißen Quelle aufnimmt.

17. Verfahren nach einem der beiden vorstehenden Ansprüche, wobei das zweite Wärmeträgerfluid beim Schritt des Betreibens der Brennstoffzelle (1) in dem thermodynamischen Fluidkreis (18) zirkuliert, und nacheinander durch den ersten Austauscher (3) verläuft, in dem es verdampft, und dabei Wärmeenergie aus dem ersten Wärmeträgerfluid aufnimmt, das in dem Zellenfluidkreis (2) zirkuliert, danach durch die Turbine (8), in der sich das zweite Wärmeträgerfluid entspannt und dadurch die Erzeugung von mechanischer Energie ermöglicht, danach durch den zweiten Austauscher (4), in dem das zweite Wärmeträgerfluid in Kontakt mit einer kalten Quelle kondensiert, danach durch eine Pumpe (7), in der das zweite Wärmeträgerfluid unter Druck gesetzt wird, um zu dem ersten Austauscher (3) geschickt zu werden.

18. Verfahren nach Anspruch 12, wobei das thermodynamische System einen reversiblen Stirling Motor (15) umfasst, der konfiguriert ist, um der Brennstoffzelle (1) beim Schritt des Startens der Brennstoffzelle (1) Wärmeenergie bereitzustellen, und konfiguriert ist, um die erzeugte Wärme im Schritt des Betreibens der Brennstoffzelle (1) in mechanische Energie umzuwandeln.

19. Verfahren nach dem vorstehenden Anspruch, wobei das zweite Wärmeträgerfluid beim Schritt des Startens Wärmeenergie im Bereich des zweiten Austauschers (4) durch Austausch mit einer externen Quelle (9) aufnimmt, danach Wärmeenergie in eine kalte Zone (21) des Stirling Motors (15) durch Austausch mit einem Arbeitsfluid, das in dem Stirling Motor (15) zirkuliert, überträgt, ein Kolben (25), der durch ein Rad (26) betätigt wird, das Arbeitsfluid in der heißen Zone (20) verschiebt, das zweite Wärmeträgerfluid Wärmeenergie durch Austausch mit dem Arbeitsfluid der heißen Zone (20) des Stirling Motors (15) aufnimmt, die er an das erste Wärmeträgerfluid in dem ersten Austauscher (3) überträgt.

20. Verfahren nach dem vorstehenden Anspruch, wobei das zweite Wärmeträgerfluid beim Schritt des Betreibens Wärmeenergie im Bereich des ersten Austauschers (3) durch Austausch mit dem ersten Wärmeträgerfluid aufnimmt, danach die Wärmeenergie in eine heiße Zone (20) des Stirling Motors (15) durch Austausch mit einer Arbeitsflüssigkeit, die in dem Stirling Motor (15) zirkuliert, übergibt, um einen Kolben (25) des Motors zu betätigen, der eine mechanische Energie erzeugt und das Arbeitsfluid in der kalten Zone (21) verschiebt, wobei das zweite Wärmeträgerfluid die Wärmeenergie durch Austausch mit dem Arbeitsfluid der kalten Zone (21) des Stirling Motors (15) aufnimmt.

## Claims

1. Energy production assembly comprising a fuel cell (1), a cell fluid circuit (2) configured to receive a first heat-transfer fluid and arranged at least partially around the fuel cell (1), **characterised in that**
the assembly comprises a reversible thermodynamic system configured to alternatively:
- discharge the thermal energy produced by the fuel cell (1) and transform it into mechanical energy through the first heat-transfer fluid, and
- provide thermal energy to the fuel cell (1) through the first heat-transfer fluid,
the thermodynamic system comprising:
- a thermodynamic fluid circuit (18) configured to receive a second heat-transfer fluid,
- a first exchanger (3) intended to exchange thermal energy between the thermodynamic fluid circuit (18) and the cell fluid circuit (2), and
- a second exchanger (4) intended to exchange thermal energy between the thermodynamic fluid circuit (18) and an external source.

2. Assembly according to the preceding claim, wherein the reversible thermodynamic system comprises at least one thermal energy production module connected to the first heat exchanger (3).

3. Assembly according to any one of the two preceding claims, wherein the thermal energy production module is fluidically and/or thermally connected to the first exchanger (3) by the thermodynamic fluid circuit (18) so as to exchange the thermal energy produced by the thermal energy production module to the cell fluid circuit (2).

4. Assembly according to any one of the preceding claims, wherein the reversible thermodynamic system comprises a system associating an Organic Rankine Cycle module and a heat pump, preferably the heat pump comprises a compressor (5) and a pressure reducer (6) arranged in series with the first exchanger (3) and the second exchanger (4), and preferably the Organic Rankine Cycle module comprises a turbine (8) and at least one pump (7) intended to make the second heat-transfer fluid circulate in the thermodynamic fluid circuit (18), the turbine (8) and the pump (7) being arranged in series with the first exchanger (3) and the second exchanger (4), preferably the compressor (5) is arranged in parallel with the turbine (8) and the pump (7) is arranged in parallel with the pressure reducer (6).

5. Assembly according to the preceding claim, wherein the thermodynamic fluid circuit (18) comprises a heat pump circuit successively fluidically connecting the first exchanger (3), the pressure reducer (6), the second exchanger (4), the compressor (5) and again, the first exchanger (3), preferably the thermodynamic fluid circuit (18) comprises an Organic Rankine Cycle module circuit successively fluidically connecting the first exchanger (3), the turbine (8), the second exchanger (4), the pump (7) and again the first exchanger (3).

6. Assembly according to any one of the three preceding claims comprising members for needling the second heat-transfer fluid alternatively to the turbine (8) of the compressor (5) and to the pump (7) or the pressure reducer (6).

7. Assembly according to claim 1, wherein the reversible thermodynamic system comprises a reversible Stirling engine (15) configured to alternatively produce mechanical energy from thermal energy and produce thermal energy from mechanical energy.

8. Assembly according to the preceding claim, wherein the thermodynamic fluid circuit (18) comprises a first loop (18a) and a second loop (18b), the first loop (18a) configured to allow the circulation of the second heat-transfer fluid between the first exchanger (3) and a hot zone (20) of the Stirling engine (15), the second loop (18b) configured to allow the circulation of the second heat-transfer fluid between the second exchanger (4) and a cold zone (21) of the Stirling engine (15).

9. Assembly according to the preceding claim, comprising a third heat exchanger (16) arranged on the first loop configured to exchange thermal energy between the second heat-transfer fluid of the first loop (18a) and an intermediate heat-transfer fluid configured to circulate around the hot zone (20) of the Stirling engine (15), and a fourth heat exchanger (17) arranged on the second loop (18b) configured to exchange thermal energy between the second heat-transfer fluid of the second loop (18b) and the intermediate heat-transfer fluid configured to circulate around the cold zone (21) of the Stirling engine (15).

10. Assembly according to any one of the preceding claims, wherein the fuel cell (1) is of the high-temperature proton exchanger membrane-type.

11. Assembly according to any one of the preceding claims, comprising an energy production module associated with the fuel cell (1) configured to produce electricity from the electron flow produced by the fuel cell (1).

12. Method for producing energy by an energy production assembly according to any one of the preceding claims, comprising the following steps
- starting-up of the fuel cell (1) by a thermal energy application to the cell,
- of operating the fuel cell (1) generating an electric current and thermal energy,
**characterised in that** during the start-up step, a reversible thermodynamic system provides thermal energy to the fuel cell (1) through a first heat-transfer fluid and that during the operating step, said reversible thermodynamic system discharges produced by the fuel cell (1) through the first heat-transfer fluid and transforms it into mechanical energy through a second heat-transfer fluid.

13. Method according to the preceding claim, wherein during the start-up step, a first heat exchanger (3) transmits thermal energy from a second heat-transfer fluid circulating in a thermodynamic fluid circuit (18) to a first heat-transfer fluid circulating in a cell fluid circuit (2).

14. Method according to any one of the two preceding claims, wherein during the start-up step, a second heat exchanger (4) transmits thermal energy from an external source to the second heat-transfer fluid circulating in the thermodynamic fluid circuit (18).

15. Method according to the preceding claim, wherein the thermodynamic system comprises an Organic Rankine Cycle module operating during the operating step of the fuel cell (1) and configured to transform the heat produced into electrical energy, the Organic Rankine Cycle module being associated with a heat pump operating during the start-up step of the fuel cell (1) and configured to provide thermal energy to the fuel cell (1).

16. Method according to the preceding claim, wherein during the start-up step of the fuel cell (1), the second heat-transfer fluid circulates in the thermodynamic fluid circuit (18) by successively passing through the compressor (5) circulating the second heat-transfer fluid, then the second heat-transfer fluid passes into the first exchanger (3), wherein the second heat-transfer fluid is condensed and transfers thermal energy to the first heat-transfer fluid for the start-up of the fuel cell (1), then passes through the pressure reducer (6), wherein the second heat-transfer fluid undergoes a fall in pressure, then passes through the second exchanger (4), wherein the second heat-transfer fluid is evaporated by recovering the thermal energy from a hot source.

17. Method according to any one of the two preceding claims, wherein during the operating step of the fuel cell (1), the second heat-transfer fluid circulates in the thermodynamic fluid circuit (18) by successively passing through the first exchanger (3), wherein it is vaporised by recovering the thermal energy from the first heat-transfer fluid circulating in the cell fluid circuit (2), then by the turbine (8), wherein the second heat-transfer fluid is expanded allowing the production of mechanical energy, then by the second exchanger (4), wherein the second heat-transfer fluid is condensed in contact with a cold source, then by a pump (7), wherein the second heat-transfer fluid is pressurised to be sent to the first exchanger (3).

18. Method according to claim 12, wherein the thermodynamic system comprises a reversible Stirling engine (15) configured to provide thermal energy to the fuel cell (1) during the start-up step of the fuel cell (1) and configured to transform the heat produced into mechanical energy during the operating step of the fuel cell (1).

19. Method according to the preceding claim, wherein during the start-up step, the second heat-transfer fluid recovers thermal energy at the level of the second exchanger (4) by exchange with external source (9) then transmits thermal energy to a cold zone (21) of the Stirling engine (15) by exchange with a working fluid circulating in the Stirling engine (15), a piston (25) actuated by a wheel (26) moves the working fluid into the hot zone (20), the second heat-transfer fluid recovers the thermal energy by exchange with the working fluid and the hot zone (20) of the Stirling engine (15) that it transfers to the first heat-transfer fluid in the first exchanger (3).

20. Method according to the preceding claim, wherein during the operating step, the second heat-transfer fluid recovers thermal energy at the level of the first exchanger (3) by exchange with the first heat-transfer fluid then transmits the thermal energy to a hot zone (20) of the Stirling engine (15) by exchange with a working fluid circulating in the Stirling engine (15) so as to actuate a piston (25) of the engine producing a mechanical energy and moving the working fluid into the cold zone (21), the second heat-transfer fluid recovering thermal energy by exchange with the working fluid of the cold zone (21) of the Stirling engine (15).
